# EUROPEAN PATENT SPECIFICATION

(11) **EP 0 678 846 B1**
(45) Date of publication and mention of the grant of the patent: **04.08.1999**
(21) Application number: 95302228.2
(22) Date of filing: 03.04.1995
(51) Int. Cl.: G09G 3/36

(54) **Improvement for power saving in an active matrix display with grey scales**
Verbesserung zur Energiesparung in einer Anzeigevorrichtung mit aktiver Matrix mit Grauwerten
Perfectionnement pour réduire la consommation d'énergie dans un affichage à matrice active avec niveau de gris

(30) Priority: 04.04.1994 JP 6614594
(43) Date of publication of application: 25.10.1995
(73) Proprietor: SHARP KABUSHIKI KAISHA, Osaka-shi, Osaka-fu 545-0013 (JP)
(72) Inventor: Kawaguchi, Takafumi, Yamatotakada-shi, Nara-ken (JP); Tomiyoshi, Akira, Nara-shi, Nara-ken (JP); Takeda, Makoto, Nara-shi, Nara-ken (JP)
(74) Representative: Suckling, Andrew Michael

(56) References cited:
- EP-A- 0 433 054
- EP-A- 0 515 191

## Description

### 1. Field of the Invention:

The present invention relates to active matrix type display apparatus that are capable of gray scale display by applying pulse-like voltages having different duty ratios to pixel electrodes.

### 2. Description of the Related Art:

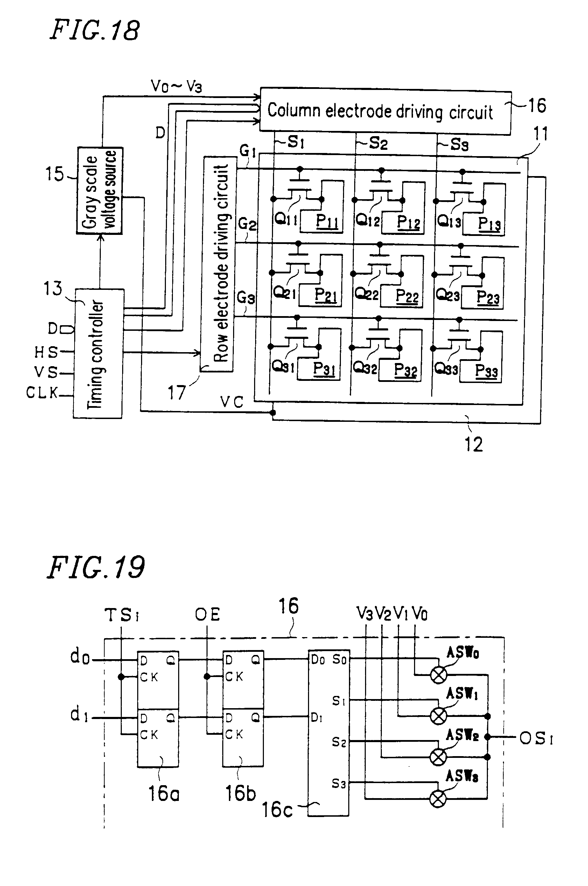

Figure **18** shows an exemplified configuration of a conventional active matrix type liquid crystal display apparatus that is capable of gray scale display by using analog voltages having different voltage levels. In Figure **18** and the following description, it is assumed for simplification that the liquid crystal display apparatus has pixels aligned in three rows and three columns.

The liquid crystal display apparatus includes a pair of substrates **11** and **12** opposing each other with liquid crystal interposed therebetween. On one surface of the substrate **11** opposing the substrate **12** are formed pixel electrodes **P11** through **P33** made of transparent conductive films in a matrix of three rows and three columns. In the vicinity of the pixel electrodes **P11** through **P33** are disposed three row electrodes (gate lines) **G1** through **G3** and three column electrodes (source lines) **S1** through **S3** so that the row electrodes **G1** through **G3** cross the column electrodes **S1** through **S3** at right angles. On the respective crossings between the row electrodes **G1** through **G3** and the column electrodes **S1** through **S3** are disposed thin film transistors (TFTs) **Q11** through **Q33**. Each of the pixel electrodes **P11** through **P33** is connected to the corresponding column electrode **S1, S2** or **S3** via the source and the drain of one of the TFTs **Q11** through **Q33** corresponding to the pixel electrode. The gate terminal of each of the TFTs **Q11** through **Q33** is connected to the corresponding row electrode **G1, G2** or **G3**. On the entire surface of the substrate **12** opposing the substrate **11** is formed a counter electrode. Accordingly, liquid crystal cells are formed between the counter electrode on the substrate **12** and the pixel electrodes **P11** through **P33** on the substrate **11** by interposing the liquid crystal therebetween. As a result, the liquid crystal display apparatus is capable of the gray scale display by varying the transmission of light depending upon the voltages charged at the respective pixel electrodes **P11** through **P33** (i.e., potential differences with the counter electrode).

This liquid crystal display apparatus includes, as peripheral circuits, a timing controller **13,** a gray scale voltage source **15**, a column electrode driving circuit **16** and a row electrode driving circuit **17**. The timing controller **13** receives display data **D**, a vertical synchronizing signal **VS**, a horizontal synchronizing signal **HS** and a dot clock signal **CLK,** all of which are externally supplied, and generates various synchronizing signals. The timing controller **13** transfers the generated synchronizing signals to the gray scale voltage source **15**, the column electrode driving circuit **16** and the row electrode driving circuit **17**. The column electrode driving circuit **16** is supplied with the display data **D** as well as the synchronizing signals.

The gray scale voltage source **15** generates a plurality of analog gray scale voltages **V0** through **V3** having different voltage levels depending upon the respective gray levels of the gray scale display, and supplies the analog gray scale voltages **V0** through **V3** to the column electrode driving circuit **16.** The gray scale voltage source **15** also generates a counter electrode signal **VC** whose voltage level is varied in each vertical scanning term **TV** based on a synchronizing signal supplied by the timing controller **13,** and supplies the counter electrode signal **VC** to the counter electrode on the substrate **12.**

The row electrode driving circuit **17** generates three kinds of row electrode scanning signals **OG1** through **OG3** that are successively activated in each horizontal scanning term **TH** based on the synchronizing signals supplied by the timing controller **13,** and transfers each of the row electrode scanning signals **OG1** through **OG3** to the corresponding row electrode **G1, G2** or **G3.** When the row electrode scanning signals **OG1** through **OG3** respectively are output, the row electrodes **G1** through **G3** are activated, and the corresponding TFTs **Q11** through **Q33** connected to the row electrodes **G1** through **G3** become conductive. Therefore, for example, when the row electrode scanning signal **OG2** output to the row electrode **G2** is activated, all the TFTs **Q21, Q22** and **Q23** connected to the row electrode **G2** become conductive, thereby connecting the corresponding row of pixel electrodes **P21, P22** and **P23** to the respective column electrodes **S1** through **S3.**

The column electrode driving circuit **16** serial/parallel converts the display data **D**, that is, a digital signal, for three pixels at one time, selects one of the analog gray scale voltages **V0** through **V3** supplied by the gray scale voltage source **15** so as to correspond to each display data **D** for the three pixels, and outputs the selected voltage as column electrode driving signals **OS1** through **OS3** to the respective column electrodes **S1** through **S3** on the substrate **11** simultaneously.

Figure **19** shows a specific exemplified configuration of the column electrode driving circuit **16.** This drawing shows merely part of the circuit where a column electrode driving signal **OSi** is output to one column electrode **Si** (wherein i is 1, 2 or 3). This means that the number of such a circuit as is shown in Figure **19** in the actual column electrode driving circuit **16** is equal to the number of the column electrodes **Si.** Further, it is assumed in the following description that the display data **D** is composed of two data bits **d0** and **d1** for a gray scale display with four levels.

The display data **D** for three pixels are successively transferred in serial from the timing controller **13** to the column electrode driving circuit **16** in one horizontal scanning term **TH**, whereas the two data bits **d0** and **d1** in the display data **D** for one pixel are transferred to the column electrode driving circuit **16** in parallel. The data bits **d0** and **d1** are latched in a sample latch circuit **16a** in response to a sampling pulse **TSi**. The sampling pulse **TSi** is one of the synchronizing signals supplied by the timing controller **13,** and in the display apparatus of Figure **18**, three sampling pulses **TS1** through **TS3** are transferred by the timing controller **13.** The sampling pulses **TS1** through **TS3** successively rise every time the display data **D** for one pixel is supplied. This is repeated in each horizontal scanning term **TH** in which the display data **D** for three pixels are supplied. The data bits **d0** and **d1** latched in the sample latch circuit **16a** are latched in a hold latch circuit **16b** in response to a hold pulse **OE**. The hold pulse **OE** is also one of the synchronizing signals supplied by the timing controller **13** and rises once in each horizontal scanning term **TH**. Therefore, the data bits **d0** and **d1** for three pixels transferred in one horizontal scanning term **TH** are successively latched in the sample latch circuit **16a** and simultaneously latched in the hold latch circuit **16b** so as to be serial/parallel converted.

The data bits **d0** and **d1** latched in the hold latch circuit **16b** are transferred to a decoder circuit **16c.** The decoder circuit **16c** activates one of four outputs **S0** through **S3** in accordance with the digital values of the data bits **d0** and **d1** received as inputs **D0** and **D1**. The four outputs **S0** through **S3** are transferred to the control input terminals of four analog switches **ASW0** through **ASW3,** respectively. The analog switches **ASW0** through **ASW3** select one of the analog gray scale voltages **V0** through **V3** supplied by the gray scale voltage source **15** in accordance with the outputs **S0** through **S3** of the decoder circuit **16c,** and output the selected voltage as the column electrode driving signal **OSi**. The column electrode driving signal **OSi** is supplied to the corresponding column electrode **Si.**

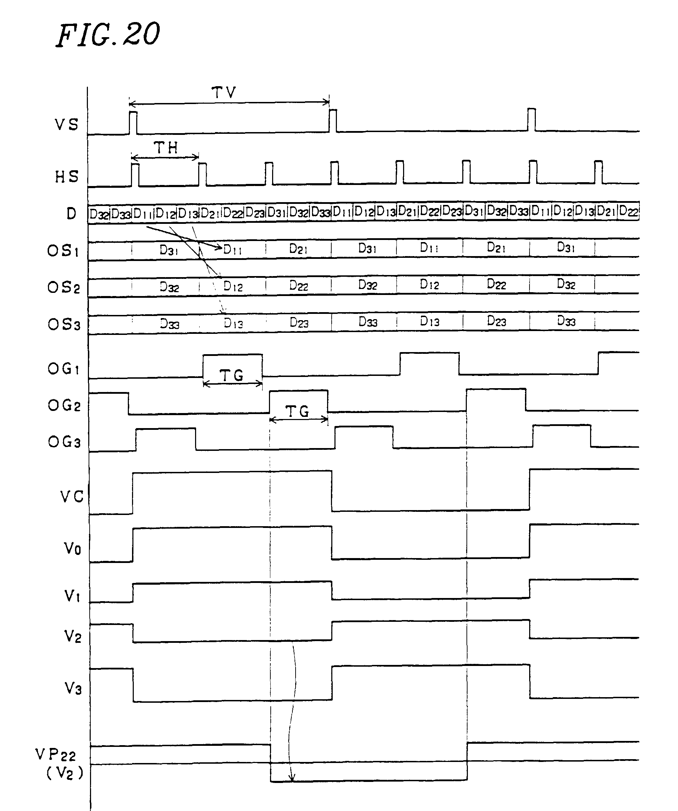

The operation of such a liquid crystal display apparatus will now be described based on a timing diagram shown in Figure **20.**

Since the pixel electrodes **P11** through **P33** are aligned in the matrix with the three rows and the three columns, one period of the vertical synchronizing signal **VS** includes three periods of the horizontal synchronizing signal **HS.** One period of the vertical synchronizing signal **VS** corresponds to a vertical scanning term **TV** and one period of the horizontal synchronizing signal **HS** corresponds to a horizontal scanning term **TH**. The display data **D** for three pixels are transferred in each horizontal scanning term **TH,** and the display data **D** for all the pixel electrodes **P11** through **P33** (which are denoted by reference numerals **D11** through **D33** in Figure **20** for the convenience of the description) are transferred in one vertical scanning term **TV.**

The column electrode driving signals **OS1** through **OS3** output to the column electrodes **S1** through **S3** correspond to the analog gray scale voltages **V0** through **V3** corresponding to the respective display data **D11** through **D33.** For example, the column electrode driving signal **OS2** is one of the analog gray scale voltages **V0** through **V3** corresponding to the display data **D12, D22** and **D32,** and is switched in each horizontal scanning term **TH.** Further, the column electrode driving signal **OS2** is one of the analog gray scale voltages **V0** through **V3** corresponding to, for example, the display data **D12** in a horizontal scanning term **TH** subsequent to a horizontal scanning term **TH** when the display data **D12** is transferred to the column electrode driving circuit **16.**

Any one of the row electrode scanning signals **OG1** through **OG3** output to the row electrodes **G1** through **G3** successively undergoes allow to high transition in each horizontal scanning term **TH**. Specifically, the first row electrode scanning signal **OG1** is at a high level in a second horizontal scanning term **TH** in one vertical scanning term **TV,** the second row electrode scanning signal **OG2** is at a high level in a third horizontal scanning term **TH** in the same vertical scanning term **TV,** and the third row electrode scanning signal **OG3** is at a high level in a first horizontal scanning term **TH** in the subsequent vertical scanning term **TV.** Such level changes are repeated in each vertical scanning term **TV**, whereas the row electrode scanning signals **OG1** through **OG3** are actually at a high level not in the entire horizontal scanning term **TH** but in a row electrode scanning term **TG** that accounts for a great part of the horizontal scanning term **TH.**

The analog gray scale voltages **V0** through **V3** are driving signals having different fixed voltage levels. The voltage levels of the analog gray scale voltages **V0** through **V3** can be switched in each vertical scanning term **TV** so as to be inverted at the height. Also, the counter electrode signal **VC** supplied to the counter electrode on the substrate **12** is a driving signal having a desired voltage level, and can be switched between higher and lower potentials in each vertical scanning term **TV**. The absolute value of a potential difference between the counter electrode signal **VC** and each of the analog gray scale voltages **V0** through **V3** is constant, respectively, and merely the polarity of the potential difference is inverted in each vertical scanning term **TV**. Accordingly, a voltage whose polarity is inverted in each vertical scanning term **TV** is applied between each of the pixel electrodes **P11** through **P33** on the substrate **11** and the counter electrode on the substrate **12**. Such **AC** drive prevents the liquid crystal from degrading. As alternative **AC** drive, the counter electrode signal **VC** is always kept at a fixed voltage level, and the voltage levels of the analog gray scale voltages **V0** through **V3** alone are switched to be symmetrical about the fixed voltage level.

Now, the case where the display data **D22** corresponds to the analog gray scale voltage **V2** will be exemplified. Since a potential difference between the analog gray scale voltage **V2** and the counter electrode signal **VC** is applied between the pixel electrode **P22** and the counter electrode in a row electrode scanning term **TG** when the row electrode scanning signal **OG2** is at a high level, the voltage waveform at the pixel electrode **P22** is obtained, by using the potential of the counter electrode as a reference, as is shown as a waveform **VP22** in Figure **20.** Specifically, in the row electrode scanning term **TG** when the row electrode scanning signal **OG2** is at a high level, the TFT **Q22** is conductive so that the pixel electrode **P22** is charged/discharged to have a voltage level defined by the analog gray scale voltage **V2.** Then, this voltage level is maintained until the row electrode scanning signal **OG2** is activated again by cutting off the TFT **Q22.** When the row electrode scanning signal **OG2** is activated again, the pixel electrode **P22** is charged/discharged to have a reverse voltage level with the same absolute value. This procedure is repeated thereafter.

In this conventional liquid crystal display apparatus, the four kinds of analog gray scale voltages **V0** through **V3** are generated in the gray scale voltage source **15**, and the number of the kinds of the voltages is equal to the number of the levels of the gray scale display. These analog gray scale voltages **V0** through **V3** are, however, generated in an analog circuit generally including a combination of an operational amplifier, a transistor for current amplification and the like. Therefore, such an analog circuit occupies a large part of the entire driving circuit not only in the mounting space but also in the production cost. In addition, when the number of the levels of the gray scale display is increased, a larger number of kinds of analog gray scale voltages are required, resulting in making this problem more serious. Moreover, the number of the analog switches **ASW0** through **ASW3** as shown in Figure **19** required for each of the column electrodes **S1** through **S3** in the column electrode driving circuit **16** is identical to the number of the levels of the gray scale display, i.e., four in the aforementioned description. Such a large number of analog switches also occupy a large space in each chip. Further, the number of the analog switches **ASW** is accumulatively increased when the number of the levels of the gray scale display is increased or when the number of the column electrodes is increased to attain high resolution.

In order to solve the above-mentioned problems, an active matrix type liquid crystal display apparatus for the gray scale display has been conventionally developed in which pulse-like voltages having different duty ratios are applied to pixel electrodes.

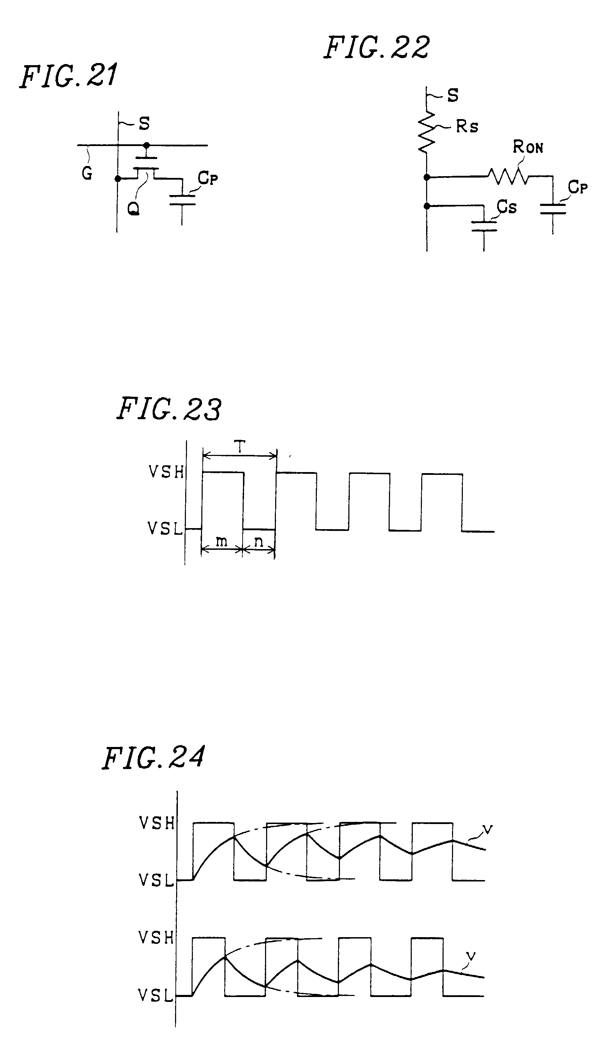

An equivalent circuit for one pixel in such an active matrix type liquid crystal display apparatus is shown in Figure **21.** As is shown in Figure **21**, a pixel capacitance **CP**, which is formed by a pixel electrode **P** and a counter electrode together with liquid crystal sandwiched therebetween, is connected to a column electrode **S** via the source and the drain of a TFT **Q** whose gate is connected to a row electrode **G**. A circuit diagram as is shown in Figure **22** can be obtained when the ON resistance of the TFT **Q** is indicated by **RON,** and the capacitance of the column electrode **S** and the distributed capacitance between the column electrode **S** and the counter electrode are respectively indicated by a column electrode resistance **RS** and a column electrode capacitance **CS,** which are concentrated constants thereof. Now, a circuit composed of the ON resistance **RON** and the pixel capacitance **CP** and a circuit composed of the column electrode resistance **RS** and the column electrode capacitance **CS** will be studied. When a voltage V is applied in a stepwise manner to such a series circuit composed of a resistance R and a capacitance C, the terminal voltage v of the capacitance C is varied with time t as represented by the following equation 1:$\text{Equation 1:} \text{v(t) = V (1-e} {\text{}}^{\text{-} \frac{\text{t}}{\text{RC}}} \text{)}$ The time constant in this case is a product RC of the resistence R and the capacitance C. Further, when the terminal voltage v of the capacitance C is regarded as the output of this circuit, this circuit can be considered to have a low-pass filter characteristic in accordance with the time constant RC, and hence, the circuit has a function to smooth and average an input voltage. Accordingly, when a pulse signal in which two kinds of voltages **VSH** and **VSL** are alternately repeated as is shown in Figure **23** is applied to this circuit, the capacitance **C** is charged with an average voltage obtained by averaging the voltages **VSH** and **VSL** on the basis of a duty ratio m:n of the pulse signal as represented by equation 2, if the time constant RC is sufficiently long as compared with a period T of the pulse signal:$\text{Equation 2:} \frac{\text{m VSH + n VSL}}{\text{T}}$ This means that, as is shown in Figure **24,** the terminal voltage v shown with a heavy line is gradually averaged through the repeat of charge/discharge. When the value of m of the duty ratio m:n of the pulse signal is large, the terminal voltage v is averaged to be at a high voltage level, and when the value of m is small, it is averaged to be at a low voltage level. When the voltage to be charged in the pixel capacitance CP is varied by applying such pulse signals having different duty ratios to the column electrode S, the gray scale display can be realized without using an analog gray scale voltage by merely supplying the two kinds of voltages **VSH** and **VSL**.

In an actually used liquid crystal display apparatus, although the ON resistance **RON** is generally larger than the column electrode resistance **RS** and the pixel capacitance **CP** is generally smaller than the column electrode capacitance **CS,** the time constant **RON x CP** of the ON resistance **RON** and the pixel capacitance **CP** is sufficiently longer than the time constant **RS x CS** of the column resistance **RS** and the column electrode capacitance **CS.** Therefore, the charging/discharging characteristic in the case where the pixel capacitance **CP** is charged/discharged is defined not by the time constant **RS x CS** of the column electrode **S** but by the time constant **RON x CP** in each pixel.

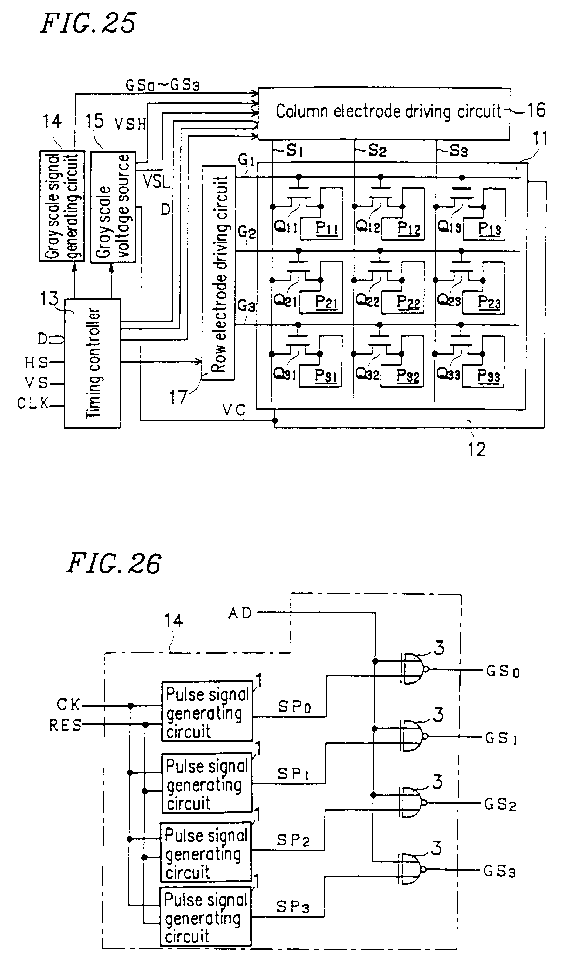

An exemplified configuration of the conventional liquid crystal display apparatus using the application of such a pulse-like voltage is shown in Figure **25**. This liquid crystal display apparatus has substantially the same configuration as that shown in Figure **18,** and hence, the same reference numerals are used to refer to elements having the same function and the description thereof is omitted.

This liquid crystal display apparatus includes a gray scale signal generating circuit **14** for generating four kinds of gray scale pulse signals **GS0** through **GS3** based on a synchronizing signal transferred by the timing controller **13**. The gray scale pulse signals **GS0** through **GS3** are supplied to the column electrode driving circuit **16**. The gray scale voltage source **15** supplies, instead of the analog gray scale voltages **V0** through **V3,** the two kinds of voltages **VSH** and **VSL** to the column electrode driving circuit **16.**

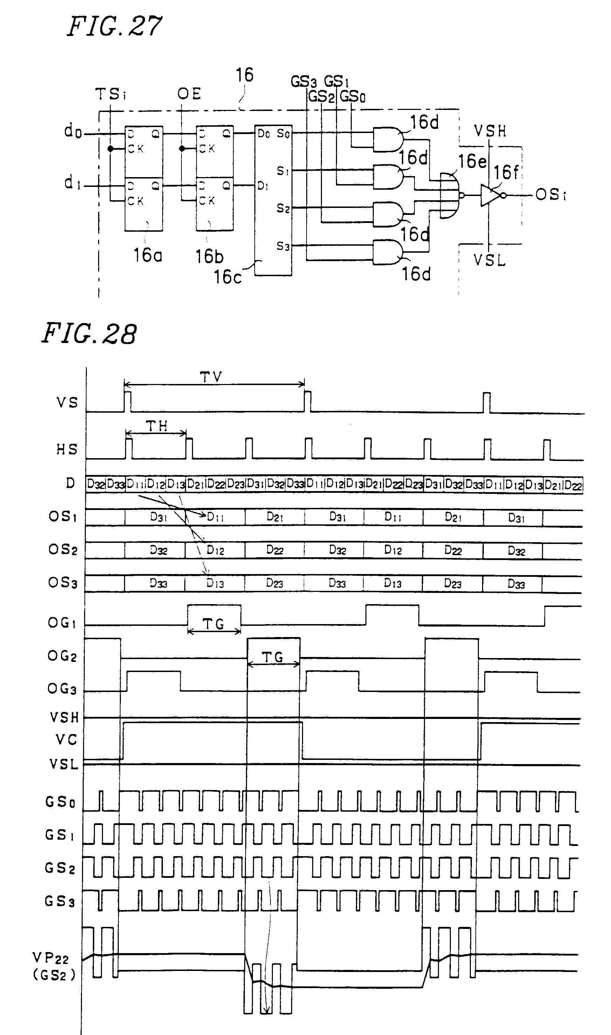

The gray scale signal generating circuit **14** includes, as is shown in Figure **26,** four pulse signal generating circuits **1** and four EXNOR circuits **3**. The four pulse signal generating circuits **1** generate four kinds of pulse signals **SP0** through **SP3** having the same period but different duty ratios based on a clock signal **CK** and a reset signal **RES** transferred by the timing controller **13.** The pulse signals **SP0** through **SP3** are transferred to one input terminal of the corresponding EXNOR circuit **3**. The other input terminal of the EXNOR circuit **3** is supplied with an **AC** driving signal **AD** that is transferred by the timing controller **13** and is inverted in each vertical scanning term **TV.** The EXNOR circuit **3** calculates an exclusive OR of each of the pulse signals **SP0** through **SP3** and the **AC** driving signal **AD**, and outputs one of the gray scale pulse signals **GS0** through **GS3** that have different duty ratios and are inverted (i.e., made into an inverse) in each vertical scanning term **TV**, as is shown in Figure **28** described in detail below.

A specific exemplified configuration of the column electrode driving circuit **16** supplied with the gray scale pulse signals **GS0** through **GS3** is shown in Figure **27**. Similarly to Figure **19,** this drawing also shows merely part of the circuit where a column electrode driving signal **OSi** is output to one column electrode **Si,** and it is also assumed that display data **D** is composed of two data bits **d0** and **d1.**

The sample latch circuit **16a**, the hold latch circuit **16b** and the decoder circuit **16c** have the same functions as those used in the column electrode driving circuit **16** of Figure **19,** and hence, the description thereof is omitted. The four outputs of the decoder circuit **16c** are transferred to one input terminal of each of four AND circuits **16d**. Each AND circuit **16d** selects one of the four gray scale pulse signals **GS0** through **GS3** in accordance with the outputs **S0** through **S3** of the decoder circuit **16c** and outputs the selected signal. The outputs of the respective AND circuits **16d** are put together at a four-input NOR circuit **16e** to be transferred to the input terminal of a buffer circuit **16f**. The buffer circuit **16f** converts one of the gray scale pulse signals **GS0** through **GS3** at a logical level transferred through the four-input NOR circuit **16e** into a column electrode driving signal **OSi** that is applicable to drive the column electrodes **S1** through **S3,** and outputs the converted signal. Therefore, in the column electrode driving signal **OSi,** the voltages **VSH** and **VSL** supplied by the gray scale voltage source **15** are alternately repeated at the same duty ratio as that of the selected gray scale pulse signal **GS0, GS1, GS2** or **GS3.** The column electrode driving signal **OSi** is output to the corresponding column electrode **Si.**

The operation of this liquid crystal display apparatus will now be described based on a timing diagram shown in Figure **28.** With regard to the vertical synchronizing signal **VS**, the horizontal synchronizing signal **HS,** the display data **D**, the column electrode driving signals **OS1** through **OS3** and the row electrode scanning signals **OG1** through **OG3,** the above description referring to Figure **20** is applicable, and hence the description is omitted.

The gray scale pulse signals **GS0** through **GS3** are pulse signals having the same period but different duty ratios, and are also switched to have inverted duty ratios in each vertical scanning term **TV** for the **AC** drive. Also the counter electrode signal **VC** corresponding to these pulse signals is switched to have two kinds of voltages approximate to the voltages **VSH** and **VSL** in each vertical scanning term **TV.**

The case where the display data **D22** has a value corresponding to the gray scale pulse signal **GS2** will be herein exemplified. In a row electrode scanning term **TG** when the row electrode scanning signal **OG2** is at a high level, a potential difference between the counter electrode signal **VC** and the column electrode driving signal **OS2,** in which the voltages **VSH** and **VSL** are alternately repeated at the same duty ratio as that of the gray scale pulse signal **GS2,** is applied to the pixel electrode **P22.** Accordingly, the voltage waveform at the pixel electrode **P22** is obtained, by using the potential at the counter electrode as a reference, as is shown as a waveform **VP22** in Figure **28.** A charging/discharging circuit composed of the conductive TFT **Q22** and the pixel electrode **P22** has a charging/discharging characteristic defined by the time constant **RON x CP,** and hence, the oscillating voltage is averaged. Therefore, when the pixel electrode **P22** is alternately supplied with the voltages **VSH** and **VSL,** the voltage waveform **VP22,** in consideration of the actual low-pass filter characteristic, is averaged in accordance with the duty ratio of the gray scale pulse signal **GS2** as is shown with a heavy line in Figure **28.** The averaged voltage level is maintained until the row electrode scanning signal **OG2** is activated again by cutting off the TFT **Q22.** When the row electrode scanning signal **OG2** is activated again, the pixel electrode **P22** is charged/discharged to have a voltage level having the same absolute value and reverse polarity. This procedure is repeated thereafter.

As a result, in the conventional liquid crystal display apparatus shown in Figure **25**, the gray scale voltage source **15** merely supplies the two kinds of voltages **VSH** and **VSL** regardless of the number of the levels of the gray scale display. In addition, the analog switches **ASW** in the column electrode driving circuit **16** of Figure **19** are replaced with a digital circuit composed of the AND circuits **16d**, the four-input NOR circuit **16e** and the buffer circuit **16f** as shown in Figure **27.** Therefore, the problem caused by the analog circuit for the gray scale display that it requires a high cost and a large area for mounting parts can be overcome.

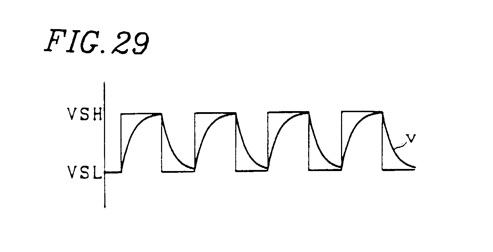

The periods of the gray scale pulse signals **GS0** through **GS3** are set to be sufficiently short as compared with the time constant **RON x CP** of the charging/discharging circuits of the pixel electrodes **P11** through **P33** of Figure **22**, so that the oscillating voltages of the column electrode driving signals **OS1** through **OS3** can be averaged without fail. Accordingly, when such oscillating voltages are applied to the column electrodes **S1** through **S3**, the charging/discharging currents flowing through the charging/discharging circuits of the pixel electrodes **P11** through **P33** are directly decreased. The oscillating voltages, however, are also applied to the charging/discharging circuits of the column electrode capacitances **CS** of the column electrodes **S1** through **S3.** The time constant **RS x CS** of the charging/discharging circuits of the column electrodes **S1** through **S3** is much shorter than the time constant **RON x CP** of the charging/discharging circuits of the pixel electrodes **P11** through **P33.** In the case where the time constant RC is shorter than the period **T** as is shown in Figure **29,** the terminal voltage v cannot be averaged but continues to oscillate, thereby allowing the charging/discharging current to continuously flow. Therefore, when the oscillating voltages of the column electrode driving signals **OS1** through **OS3** are applied to the column electrodes **S1** through **S3**, the charging/discharging currents repeatedly flow through the charging/discharging circuits of the column electrodes **S1** through **S3** having the shorter time constant **RS x CS.**

As a result, the conventional liquid crystal display apparatus using the application of the pulse-like voltage has a problem that large power is required since the charging/discharging currents wastefully flow through the column electrode capacitances **CS** of the column electrodes **S1** through **S3.**

The present invention provides an active matrix type display apparatus comprising:
a display medium made of an electro-optical material;
a pair of substrates opposing each other with the display medium interposed therebetween;
a plurality of pixel electrodes formed in a matrix on one of the substrates;
a plurality of row electrodes each of which is disposed so as to correspond to a respective row of the pixel electrodes in the matrix;
a plurality of column electrodes each of which is disposed so as to correspond to a respective column of the pixel electrodes in the matrix;
switching devices, each of which is disposed so as to correspond to a respective pixel electrode, selectively connects the corresponding pixel electrode to the column electrode corresponding to the pixel electrode, and is connected through its control terminal to the row electrode corresponding to the respective pixel electrode;
a row electrode driving circuit for applying a voltage to each of the row electrodes so that the corresponding switching devices become conductive only in a row electrode scanning term during a horizontal scanning term assigned to a respective row electrode;
a column electrode driving circuit for alternately applying two different voltages to each of the column electrodes repeatedly at a duty ratio in accordance with display data corresponding to each of the column electrodes; and
voltage switching inhibition means for inhibiting switching of the voltages to be applied to each of the column electrodes by the column electrode driving circuit at least in a part of a term that is not assigned as the row electrode scanning term of any of the row electrodes.

In one embodiment the column electrode driving circuit comprises:
pulse signal generating circuits for generating plural pulse signals having different duty ratios;
a pulse signal selecting circuit for selecting one of the pulse signals in accordance with the display data corresponding to each of the column electrodes; and
a voltage switching circuit for switching a voltage to be applied to each of the column electrodes between the voltages in accordance with the selected pulse signal, and
the voltage switching inhibition means masks the plural pulse signals generated by the pulse signal generating circuits over substantially the entire term that is not assigned as the row electrode scanning term of any of the row electrodes, so that the pulse signals have a constant voltage level, and transfers the masked signals to the pulse signal selecting circuit.

In one embodiment the column electrode driving circuit varies a switching period for the voltages to be applied to each of the column electrodes in each horizontal scanning term, so that the switching period becomes shorter at the end of each row electrode scanning term than at least at the beginning of the row electrode scanning term, and
the display apparatus further comprises voltage switching period shortening means for not increasing the switching period in the row electrode scanning term.

In one embodiment the column electrode driving circuit comprises:
pulse signal generating circuits for generating plural pulse signals having different duty ratios;
a pulse signal selecting circuit for selecting one of the pulse signals in accordance with the displays data corresponding to each of the column electrodes; and
a voltage switching circuit for switching a voltage to be applied to each of the column electrodes between the two voltages in accordance with the selected pulse signals, and
the voltage switching period shortening means varies a switching period for the voltages to be applied to the column electrodes in each horizontal scanning term, so that the switching period become shorter at the end of each row electrode scanning term than at least at the beginning of the row electrode scanning term, and does not increase the switching period in the row electrode scanning term.

In one embodiment the electro-optical material is liquid crystal.

A second aspect of the present invention provides an active matrix type display apparatus comprising:
a display medium made of an electro-optical material;
a pair of substrates opposing each other with the display medium interposed therebetween;
a plurality of pixel electrodes formed in a matrix on one of the substrates;
a plurality of row electrodes each of which is disposed so as to correspond to a respective row of the pixel electrodes in the matrix;
a plurality of column electrodes each of which is disposed so as to correspond to a respective column of the pixel electrodes in the matrix;
switching devices each of which is disposed so as to correspond to a respective pixel electrode, which selectively connects the corresponding pixel electrode to the column electrode corresponding to the pixel electrode, and is connected through its control terminal to the row electrode corresponding to the pixel electrode;
a row electrode driving circuit for applying a voltage to each of the row electrodes (Gi) so that the corresponding switching device become conductive only in a row electrode scanning term during a horizontal scanning term assigned to the corresponding row electrode;
a column electrode driving circuit for alternately applying two voltages to each of the column electrodes repeatedly at a duty ratio in accordance with display data corresponding to each f the column electrodes; and
voltage switching period shortening means for varying a switching period for the voltages to be applied to each of the column electrodes in each horizontal scanning term, so that the switching period becomes shorter at the end of each row electrode scanning term than at least at the beginning of the row electrode scanning term, and for not increasing the switching period in the row electrode scanning term.

In one embodiment the column electrode driving circuit comprises:
pulse signal generating circuits for generating plural pulse signals having different duty ratios;
a pulse signal selecting circuit for selecting one of the pulse signals in accordance with the display data corresponding to each of the column electrodes; and
a voltage switching circuit for switching a voltage to be applied to each of the column electrodes between the two voltages in accordance with the selected pulse signal.

In one embodiment the voltage switching period shortening means shortens the switching period for the two voltages in a stepwise manner in each row electrode scanning term.

In one embodiment the voltage switching period shortening means steplessly shortens the switching period for the voltages in each row electrode scanning term.

In an alternative embodiment the voltage switching period shortening means steplessly shortens the switching period for the voltages up to an intermediate point in each row electrode scanning term and makes the switching period constant thereafter.

In one embodiment the electro-optical material is liquid crystal.

In the active matrix type display apparatus of the invention, one vertical scanning term includes the horizontal scanning terms the number of which exceeds the number of the row electrodes. Each row electrode is assigned to a horizontal scanning term so as not to overlap with the other row electrodes, and a row electrode scanning term is included in the assigned horizontal scanning term. The row electrode driving circuit scans the row electrodes by applying a voltage to each of the row electrodes to make the corresponding switching device conductive merely in the row electrode scanning term for each of the row electrodes. The scan of the row electrodes by the row electrode driving circuit is repeated at periods of the vertical scanning term. The column electrode driving circuit alternately applies the two kinds of voltages repeatedly to each of the column electrodes at a duty ratio in accordance with the display data for the column electrode.

A display data corresponds to each of the column electrodes, and determines the gray level for the pixel electrodes in one row assigned to the current horizontal scanning term. Therefore, the display data corresponding to each column electrode is switched in each horizontal scanning term. When the electro-optical material is liquid crystal or the like, it is necessary to AC drive the voltages to be applied to the column electrodes for preventing the degradation of the liquid crystal. In such a case, the two kinds of voltages are switched so that the polarity of the voltage to be applied to a pixel electrode is inverted, for example, in each vertical scanning term.

When the two kinds of voltages are applied to the column electrode, the corresponding pixel electrodes are charged/discharged via the corresponding conductive switching device. Since the time constant of the charging/discharging circuit of the pixel electrode is sufficiently large, the two kinds of voltages are smoothed. The pixel electrode is charged with a substantially averaged voltage, and a charging/discharging current scarcely flows through the circuit. Further, the charging voltage has a level in accordance with the duty ratio of the two kinds of voltages, resulting in realizing the gray scale display. When the two kinds of voltages are applied to the column electrodes, however, the column electrode capacitances distributed in the column electrodes are also charged/discharged. Since the time constant of the charging/discharging circuit of the column electrode is smaller than the time constant of the charging/discharging circuit of the pixel electrode, a charging/discharging current repeatedly flows through the circuit every time the two kinds of voltages are switched. This can result in increasing power to be consumed in the display apparatus.

According to the invention, the voltage switching inhibition means inhibits the switching of the voltages to be applied to the column electrodes by the column electrode driving circuit at least in part of a term that is not assigned as a row electrode scanning term of any of the row electrodes. The term that is not assigned as a row electrode scanning term of any of the row electrodes corresponds to the first and the last portions of each horizontal scanning term that are not included in a row electrode scanning term when the row electrode scanning term does not occupy the entire horizontal scanning term, and also corresponds to the first and the last horizontal scanning terms in one vertical scanning term that are not assigned to any of the column electrodes. Such a term is regarded as a non-drive term when the two kinds of voltage to be applied to the column electrodes do not make any contribution to the charge of the pixel electrodes. The voltage switching inhibition means inhibits the switching of the voltages in part of or over the entire non-drive term. In addition, it is possible to inhibit the switching of the voltages in part of the row electrode scanning term, in particular, in a predetermined portion at the beginning of the row electrode scanning term, as far as the inhibition does not affect the charge of the pixel electrodes. In a conventional display apparatus, the two kinds of voltages are alternately applied to the column electrodes over the entire non-drive term, and therefore, the column electrode capacitance is wastefully charged/discharged. In the present invention, however, since the switching of the voltages during the non-drive term is inhibited, the waste of the power can be avoided. Further, even though the switching of the voltages are stopped in the non-drive term in this manner, the charge of the pixel electrodes is not affected.

Furthermore, the voltage switching inhibition means substantially masks the pulse signals for controlling the switching of the two kinds of voltages to be applied to the column electrodes over the entire non-drive term.

Moreover, the voltage switching period shortening means varies the switching period for the two kinds of voltages to be applied to the column electrodes in each vertical scanning term. The switching period is varied so as to be shorter at the end of each row electrode scanning term at least than at the beginning of the row electrode scanning term. In this case, such variation can be made over the entire horizontal scanning term. Now, the following two cases will be compared: one is the case where the switching period in one row electrode scanning term is constant; and the other is the case where the switching period at the end of one row electrode scanning term is shortened to be equal to or slightly shorter than the constant period. since the switching period at the beginning of the row electrode scanning term is longer in the latter case, the number of times of switching the voltages is smaller. Therefore, the number of times of charging/discharging the column electrode capacitance of the column electrode is also smaller. Thus, the waste of the power due to the charge/discharge of the column electrode capacitance can be decreased in the latter case. Further, when the switching period is longer at the beginning of the row electrode scanning term, the two kinds of voltages cannot be sufficiently smoothed although the time constant of the charging/discharging circuit of the pixel electrode is large. When the switching period is appropriately shortened thereafter, the voltages can be sufficiently smoothed at the end of the row electrode scanning term. Therefore, the charge/discharge of the pixel electrode is not affected.

The switching period is varied not to be increased at least in the row electrode scanning term. This means that the switching period is shortened or not varied at all with time. Such variation of the switching period includes, for example, stepwise shortening and stepless shortening (monotonic decrease). Further, the switching period can be steplessly shortened up to an intermediate point of the row electrode scanning term and maintained constant thereafter.

Further, in the present invention, the voltage switching period shortening means can vary the switching period by controlling the period of a pulse signal for controlling the switching of the two kinds of voltages to be applied to the column electrodes.

When the display apparatus comprises both the voltage switching inhibition means and the voltage switching period shortening means, not only the wasteful charge/discharge of the column electrode capacitance can be avoided in the non-drive term that makes no contribution to the charge of the pixel electrode, but also the number of the times of wastefully charging/discharging the column electrode capacitance during the row electrode scanning term can be decreased. As a result, such a display apparatus can more effectively decrease the power to be consumed.

Thus, the invention described herein makes possible the advantages of providing a display apparatus for the gray scale display through the application of a pulse-like voltage that consumes less power, while maintaining a characteristic of a conventional display apparatus using an analog gray scale voltage that circuit size is not increased.

These and other advantages of the present invention will become apparent to those skilled in the art upon reading and understanding the following detailed description with reference to the accompanying figures.

### BRIEF DESCRIPTION OF THE DRAWINGS

Figure **1** is a block diagram showing the configuration of a gray scale signal generating circuit used in a liquid crystal display apparatus according to Example 1 of the invention;
Figure **2** is a timing diagram showing the operation of the gray scale signal generating circuit of Figure **1**;
Figure **3** is a timing diagram showing the operation of the liquid crystal display apparatus according to Example 1 of the invention;
Figure **4** is a timing diagram in which the application of an oscillating voltage is delayed for a row electrode scanning term in the liquid crystal display apparatus of Example 1;
Figure **5** is a timing diagram in which the application of the oscillating voltage is inhibited in the former half of a row electrode scanning term in the liquid crystal display apparatus of Example 1;
Figure **6** is a block diagram showing the configuration of a gray scale signal generating circuit used in a liquid crystal display apparatus according to Example 2 of the invention;
Figure **7** is a timing diagram showing the operation of a clock period switching circuit used in the liquid crystal display apparatus of Example 2;
Figure **8** is a timing diagram showing the operation of an EXNOR circuit used in the liquid crystal display apparatus of Example 2;
Figure **9** is a timing diagram showing the voltage waveform at a pixel electrode in the liquid crystal display apparatus of Example 2;
Figure **10** is a timing diagram showing the operation of the liquid crystal display apparatus of Example 2;
Figure **11** is a block diagram showing the configuration of a gray scale signal generating circuit used in a liquid crystal display apparatus according to Example 3 of the invention;
Figure **12** is a timing diagram showing the operation of a clock period variable circuit used in the liquid crystal display apparatus of Example 3;
Figure **13** is a timing diagram showing the operation of an EXNOR circuit used in the liquid crystal display apparatus of Example 3;
Figure **14** is a timing diagram showing the voltage waveform at a pixel electrode in the liquid crystal display apparatus of Example 3;
Figure **15** is a timing diagram showing another operation of the clock period variable circuit used in the liquid crystal display apparatus of Example 3;
Figure **16** is a block diagram showing the configuration of a gray scale signal generating circuit used in a liquid crystal display apparatus according to Example 4 of the invention;
Figure **17** is a block diagram showing the configuration of a gray scale signal generating circuit used in a liquid crystal display apparatus according to Example 5 of the invention;
Figure **18** is a block diagram showing the configuration of a first conventional liquid crystal display apparatus;
Figure **19** is a block diagram showing the configuration of a column electrode driving circuit used in the liquid crystal display apparatus of Figure **18;**
Figure **20** is a timing diagram showing the operation of the liquid crystal display apparatus of Figure **18**;
Figure **21** is a diagram of an equivalent circuit of a pixel in the liquid crystal display apparatus of Figure **18;**
Figure **22** is a diagram of an equivalent circuit around the pixel in the liquid crystal display apparatus of Figure **18;**
Figure **23** is a timing diagram for pulse signals used in the liquid crystal display apparatus of Figure **18;**
Figure **24** is a timing diagram showing the averaging of pulse signals having different duty ratios in a charging/discharging circuit;
Figure **25** is a block diagram showing the configuration of a second conventional liquid crystal display apparatus;
Figure **26** is a block diagram showing the configuration of a gray scale signal generating circuit used in the liquid crystal display apparatus of Figure **25;**
Figure **27** is a block diagram showing the configuration of a column electrode driving circuit used in the liquid crystal display apparatus of Figure **25;**
Figure **28** is a timing diagram showing the operation of the liquid crystal display apparatus of Figure **25;** and
Figure **29** is a timing diagram showing the averaging of pulse signals in a charging/discharging circuit having a shorter time constant.

### DESCRIPTION OF THE PREFERRED EMBODIMENTS

The present invention will now be described by way of examples.

### (Example 1)

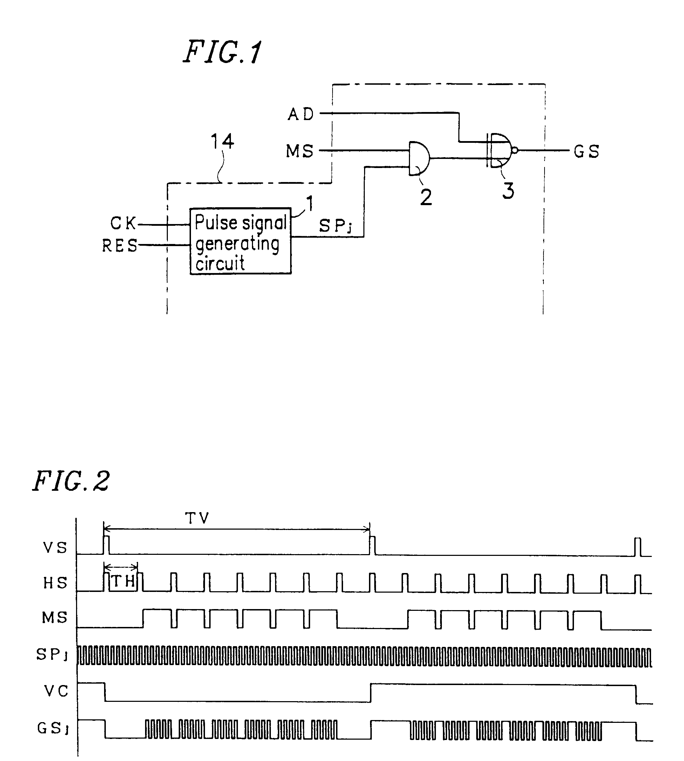

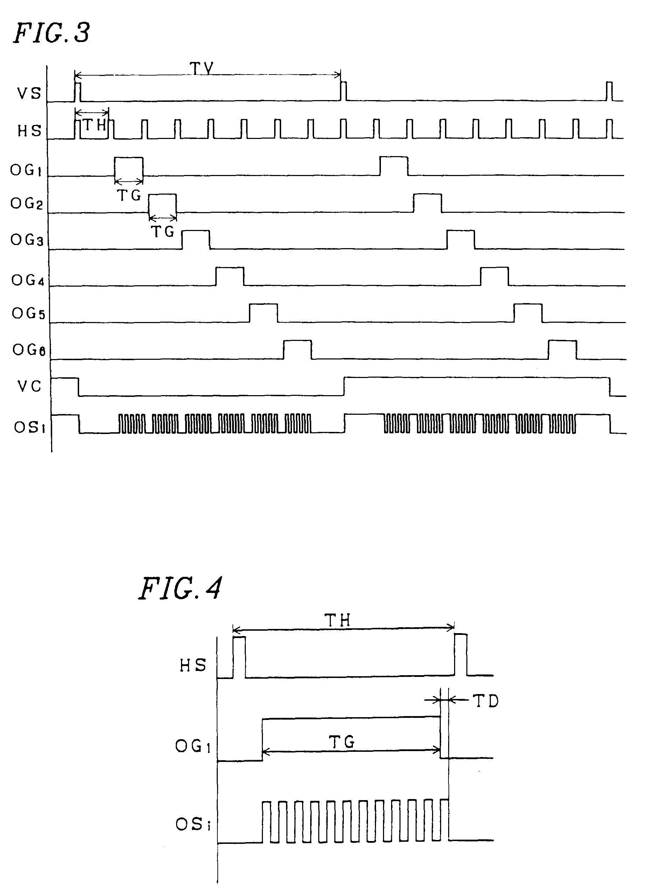

An active matrix type liquid crystal display apparatus of this example will be described in detail. The general configuration of this liquid crystal display apparatus is identical to that shown in Figure **25**, and the configuration of a column electrode driving circuit **16** is also identical to that shown in Figure **27.** The liquid crystal display apparatus, however, includes a gray scale signal generating circuit **14** having a different configuration from that of the conventional display apparatus. Figure **1** is a block diagram showing the configuration of the gray scale signal generating circuit **14** of this example, Figure **2** is a timing diagram showing the operation of this gray scale signal generating circuit **14**, and Figure **3** is a timing diagram showing the operation of the liquid crystal display apparatus of Example **1**. The same reference numerals are used to refer to the same elements used in the conventional liquid crystal display apparatus, and the description thereof is omitted. In the following description, the case where pixel electrodes **P** are formed in six rows and six row electrodes **G1** through **G6** are formed on a substrate **11** will be exemplified for the convenience of the description. Therefore, a row electrode driving circuit **17** outputs row electrode scanning signals **OG1** through **OG6** to the row electrodes **G1** through **G6,** respectively.

The gray scale signal generating circuit **14** includes plural sets of a pulse signal generating circuit **1**, an AND circuit **2** and an EXNOR circuit **3** as is shown in Figure **1**, and the number of the sets is equal to the number of levels of the gray scale display although Figure **1** shows merely one set of the pulse signal generating circuit **1**, the AND circuit **2** and the EXNOR circuit **3**. Each pulse signal generating circuit 1 generates, in accordance with a clock signal **CK** and a reset signal **RES** supplied by a timing controller **13,** a pulse signal **SPj** having the same period as but a different duty ratio from those of pulse signals generated by the other pulse signal generating circuits. As the clock signal **CK**, a dot clock signal **CLK** or the like supplied by an external computer is used, and as the reset signal **RES,** a horizontal synchronizing signal **HS** or the like is used. Each pulse signal generating circuit **1** generates the pulse signal **SPj** having a period, for example, five times as long as that of the clock signal **CK.** One of the pulse signal generating circuits **1** for generating a pulse signal **SP0** inverts the pulse signal **SP0** to have a smaller duty ratio after the first period of the clock signal **CK.** Another pulse signal generating circuit **1** for generating a pulse signal **SP1** inverts the pulse signal **SP1** to have a larger duty ratio after the second period of the clock signal **CK**. Thus, it is possible to generate four kinds of pulse signals **SP0** through **SP3** that are different from one another in the duty ratios alone. Such a pulse signal generating circuit **1** can be formed with a digital circuit composed of a combination of a counter circuit, a latch circuit and the like.

The pulse signal **SPj** is transferred to one input terminal of the AND circuit **2**. The other input terminal of the AND circuit **2** is supplied with a non-drive term mask signal **MS** by the timing controller **13.** As is shown in Figure **2**, one vertical scanning term **TV** includes eight horizontal scanning terms **TH**. The non-drive term mask signal **MS** is a pulse signal that is at a high level in a term, which is slightly shorter than one horizontal scanning term **TH,** during each of the six horizontal scanning terms **TH** excluding the first and the last horizontal scanning terms in one vertical scanning term **TV**. The first and the last horizontal scanning terms **TH** in one vertical scanning term **TV** correspond to blanking terms neither contributing to the display nor being assigned to any of the row electrodes **G1** through **G6**. Accordingly, each of the row electrode scanning signals **OG1** through **OG6** is activated in a row electrode scanning term **TG** during the six horizontal scanning terms **TH** excluding the first and the last horizontal scanning terms as shown in Figure **3**. The non-drive term mask signal **MS** is substantially equal to a logical **OR** of the row electrode scanning signals **OG1** through **OG6.** When the pulse signal **SPj** is masked with the non-drive term mask signal **MS** in this manner, the AND circuit **2** outputs a pulse signal with a predetermined duty ratio only in a term when the non-drive term mask signal **MS** is at a high level, and in the other terms, it outputs the pulse signal at a low level.

The output signal of the AND circuit **2** is transferred to one input terminal of the EXNOR circuit **3**. The other input terminal of the EXNOR circuit **3** is supplied with an AC driving signal **AD** that is generated in the timing controller **13** and inverted in each vertical scanning term **TV.** The EXNOR circuit 3 calculates an exclusive OR of the output signal of the AND circuit **2** and the AC driving signal **AD**, and outputs a signal at a high level only when the levels of these signals coincide with each other. Therefore, the EXNOR circuit **3** outputs a signal obtained by inverting the duty ratio of the output signal of the AND circuit **2** (i.e., making the duty ratio into an inverse) in each vertical scanning term **TV.** This signal corresponds to the gray scale pulse signal **GSj** shown in Figure **2**.

The gray scale signal generating circuit **14** outputs the gray scale pulse signals **GSj** having different duty ratios by the number equal to the number of levels of the gray scale display. Further, similarly to the column electrode driving circuit **16** of Figure **27**, only in a term when the gray scale pulse signal **GSj** has a predetermined duty ratio, the column electrode driving circuit **16** of this example switches the voltage between voltages **VSH** and **VSL** at the same duty ratio, thereby outputting a column electrode driving signal **OSi** to the column electrode **Si.**

In this liquid crystal display apparatus, as is shown in Figure **3**, the column electrode driving signal **OSi** is obtained by alternately repeating the voltages **VSH** and **VSL** only in a term almost identical to the row electrode scanning term **TG** when any of the row electrode scanning signals **OG1** through **OG6** is at a high level. In the other terms, the column electrode driving signal **OSi** has a voltage level corresponding to the counter electrode signal **VC.** Accordingly, an oscillating voltage is applied to the column electrode **Si** only when a TFT **Q** is actually conductive to charge/discharge the pixel electrode **P**, and in the other terms, i.e., in the non-drive terms, the oscillating voltage is not applied. The non-drive term herein means the first and the last horizontal scanning terms **TH** in each vertical scanning term **TV** and first and last short portions of each of the other horizontal scanning terms **TH.**

Accordingly, no oscillating voltage is applied to the column electrode **S** in the non-drive term that does not contribute to the charge/discharge of the pixel electrode **P** in the liquid crystal display apparatus of this example. As a result, it is possible to suppress the wasteful power consumed in the charge/discharge of the column electrode capacitance CS.

Figure **4** shows in detail the relationship between, for example, the row electrode scanning signal **OG1** and the column electrode driving signal **OSi.** The row electrode scanning term **TG** when the row electrode scanning signal **OG1** is at a high level is included in and slightly shorter than the horizontal scanning term **TH.** Generally, in the row electrode scanning term TG alone, the two kinds of voltages **VSH** and **VSL** are alternately repeated in the column electrode driving signal **OSi.** The row electrode scanning signal **OG1** and the column electrode driving signal **OSi** are, however, slightly delayed during the transfer through the row electrode **G1** and the column electrode **Si,** respectively. The effect of such delay can be compensated by elongating the term when the voltages are switched in the column electrode driving signal **OSi** so as to be longer than the row electrode scanning term **TG** by a delay term **TD** shown in Figure **4**.

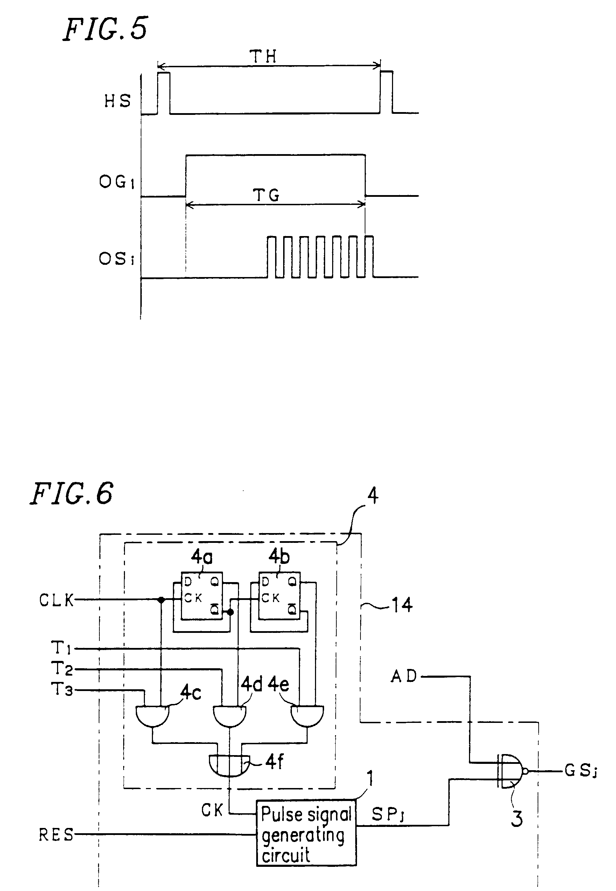

Further, in the case where the row electrode scanning term **TG** has a sufficient length as charging time for the pixel electrode **P**, the switching between the two kinds of voltages **VSH** and **VSL** in the column electrode driving signal **OSi** can be inhibited also in the former half of the row electrode scanning term **TG** as shown in Figure **5**. As a result, power to be consumed can be further decreased.

In this example, the pulse signal generating circuit **1** generates, based on the dot clock signal **CLK,** the pulse signal **SPj** serving as a source of the gray scale pulse signal **GSj.** Means for generating the pulse signals having different duty ratios is not limited to this but can be one that can directly oscillate and output a pulse signal. Further, in this example, in order to simplify the circuit configuration using the AND circuit **2** alone, the pulse signal **SPj** generated by the pulse signal generating circuit **1** is masked by the non-drive term mask signal **MS** before converting into the gray scale pulse signal **GSj** for the **AC** drive by the EXNOR circuit **3**. Such a process for inhibiting the oscillation of the pulse signal within a predetermined term can be conducted in any step. Furthermore, it is possible to control the two kinds of voltages **VSH** and **VSL** supplied to the column electrode driving circuit **16,** thereby substantially inhibiting the switching of the voltages to be output to the column electrode **Si**.

### (Example 2)

An active matrix type liquid crystal display apparatus according to Example 2 of the invention will now be described. This liquid crystal display apparatus is identical to that of Example 1 except the configuration of a gray scale signal generating circuit **14**, and hence, the description regarding the common elements is omitted. The configuration of the gray scale signal generating circuit **14** of this example is shown in the block diagram of Figure **6**.

The gray scale signal generating circuit **14** includes a clock period switching circuit **4** and plural sets of a pulse signal generating circuit **1** and an EXNOR circuit **3** as is shown in Figure **6**, and the number of the sets is equal to the number of levels of the gray scale display. Also, Figure **6** shows merely one set of the pulse signal generating circuit **1** and the EXNOR circuit **3**. The clock period switching circuit **4** includes two D-type flip-flop circuits **4a** and **4b** for successively dividing a dot clock signal **CLK.** One of the dot clock signal **CLK** and the signals divided in the respective D-type flip-flop circuits **4a** and **4b** is selected by using term control signals **T1, T2** and **T3,** and the selected signal is transferred as a clock signal **CK** to the pulse generating circuit **1** via one of three **AND** circuits **4c, 4d** and **4e,** and an OR circuit **4f.**

Each pulse signal generating circuit **1** generates, in accordance with the clock signal **CK** supplied by the clock period switching circuit **4** and a reset signal **RES** generated in a timing controller **13,** a pulse signal **SPj** having the same period as and a different duty ratio from those of signals generated by the other pulse signal generating circuits. The rest of the circuit configuration is the same as that of the conventional liquid crystal display apparatus shown in Figure **26.**

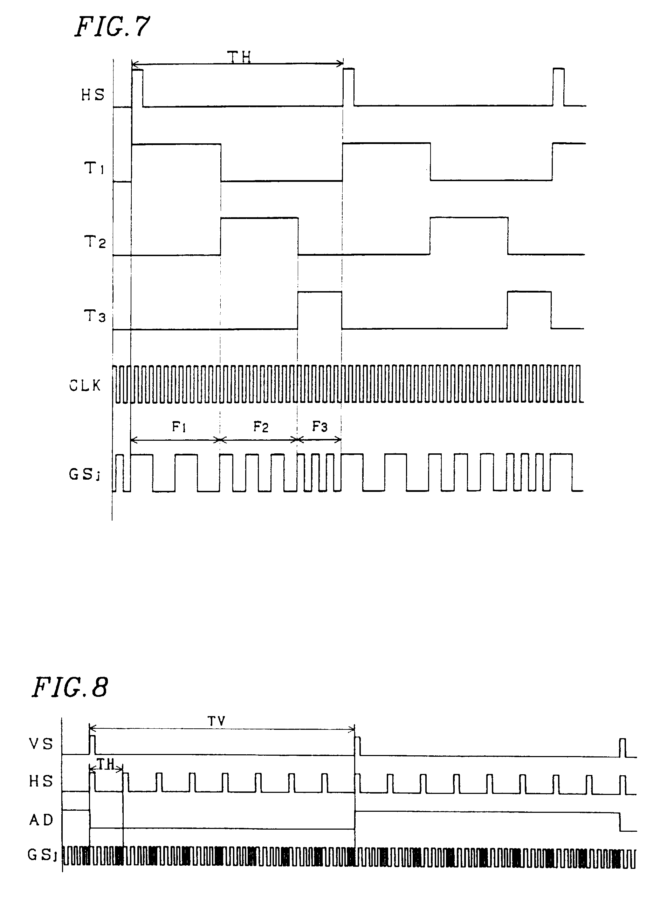

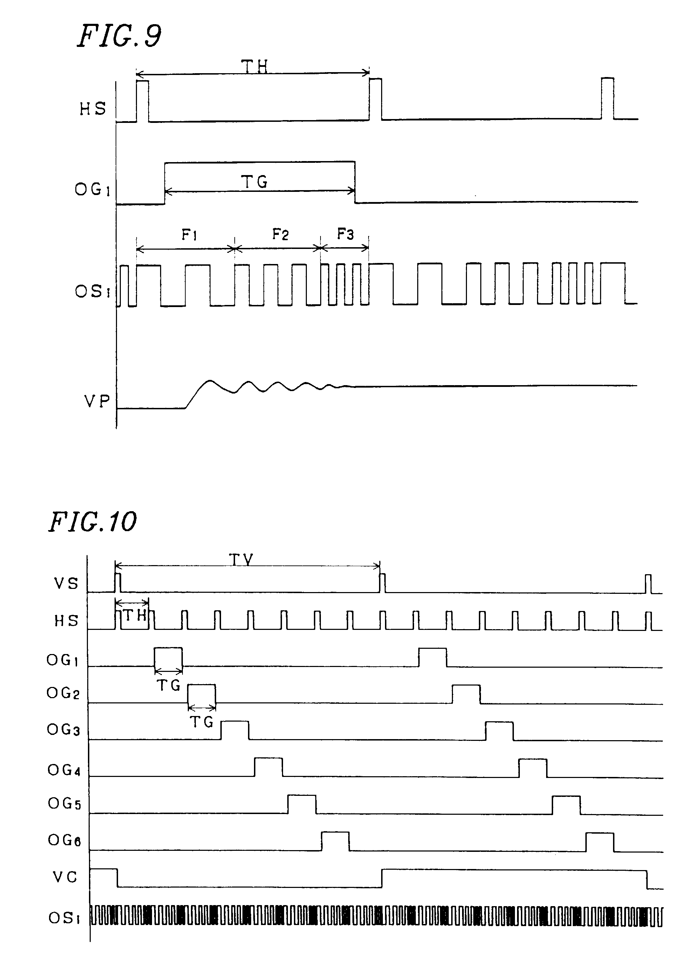

The operation of the liquid crystal display apparatus of this example will now be described referring to timing diagrams shown in Figures **7** through **9**. Figure **7** is a timing diagram for showing the operation of the clock period switching circuit **4**, Figure **8** is a timing diagram for showing the operation of the EXNOR circuit **3,** and Figure **9** is a timing diagram showing the voltage waveform at the pixel electrode **P**.

As is shown in Figure **7**, the term control signals **T1, T2** and **T3** are activated in a former portion, a middle portion and a latter portion of each horizontal scanning term **TH,** respectively. A term **F1** when the term control signal **T1** is at a high level is set to be the longest, and a term **F3** when the term control signal **T3** is at a high level is set to be the shortest. The clock period switching circuit **4** outputs to the pulse signal generating circuit **1** a clock signal **CK** having a period four times as long as that of the dot clock signal **CLK** in the term **F1** when the term control signal **T1** is at a high level. In a term **F2** when the term control signal **T2** is at a high level, the clock period switching circuit **4** outputs another clock signal **CK** having half the period, and in the term **F3** when the term control signal **T3** is at a high level, it outputs the dot clock signal **CLK** as a clock signal **CK.** Therefore, the pulse signal **SPj** generated by the pulse signal generating circuit **1** has the longest period in the first term **F1** and the shortest period in the last term **F3** in each horizontal scanning term **TH.**

The pulse signal **SPj** is transferred to the EXNOR circuit **3** so as to calculate an exclusive OR with the **AC** driving signal **AD**, and then is output through the gray scale signal generating circuit **14** as the gray scale pulse signal **GSj** in which the duty ratio is inverted in each vertical scanning term **TV** as is shown in Figure **8**. Similarly to the column electrode driving circuit **16** of Figure **27,** the column electrode driving circuit **16** of this example also alternately repeats the two kinds of voltages **VSH** and **VSL** at the same period and at the same duty ratio as those of the gray scale pulse signal **GSj,** thereby outputting the column electrode driving signal OSi to the column electrode **Si.**

Over the row electrode scanning term **TG** when, for example, the row electrode scanning signal **OG1** is at a high level, the column electrode driving signal **OSi** is applied to a pixel electrode **P1j** as the oscillating voltage via a TFT **Q1j** as is shown in Figure **9.** Then, the voltage waveform **VP** of the pixel electrode **P1j** in consideration of the actual low-pass filter characteristic is not sufficiently averaged in the first term **F1** since the period of the oscillating voltage is long. As time passes, however, through the term **F2** to the term **F3,** the period of the oscillating voltage becomes successively shorter, and hence, the voltage waveform **VP** is sufficiently averaged and becomes substantially constant. At this point, in the case where the period of the oscillating voltage in the term **F3** is set to be sufficiently short so as to attain a frequency in mHz, even when the periods in the previous terms **F1** and **F2** are rather long for sufficient averaging, the charging voltage can be averaged without fail in the last term **F3** as far as the pixel electrode is charged to some extent. Further, as compared with the case where the oscillating voltage has a constant period that is short enough for the sufficient averaging over the entire row electrode scanning term **TG**, the number of the times of alternately repeating the voltages **VSH** and **VSL** in the row electrode driving signal OSi is sufficiently small in this example.

Accordingly, in Example 2, although the two kinds of voltages **VSH** and **VSL** are alternately repeated in the column electrode driving signal **OSi** over the entire terms as is shown in Figure **10**, the number of times of charging/discharging the column electrode capacitance **CS** of the column electrode **Si** is decreased in the former portion of each horizontal scanning term **TH** because the period of the oscillating voltage is long. As a result, the power consumed can be decreased. Further, in the latter portion of each horizontal scanning term **TH,** the charging voltage can be averaged without fail because the period of the oscillating voltage is sufficiently short. Therefore, there is no possibility of the degradation of the display quality.

### (Example 3)

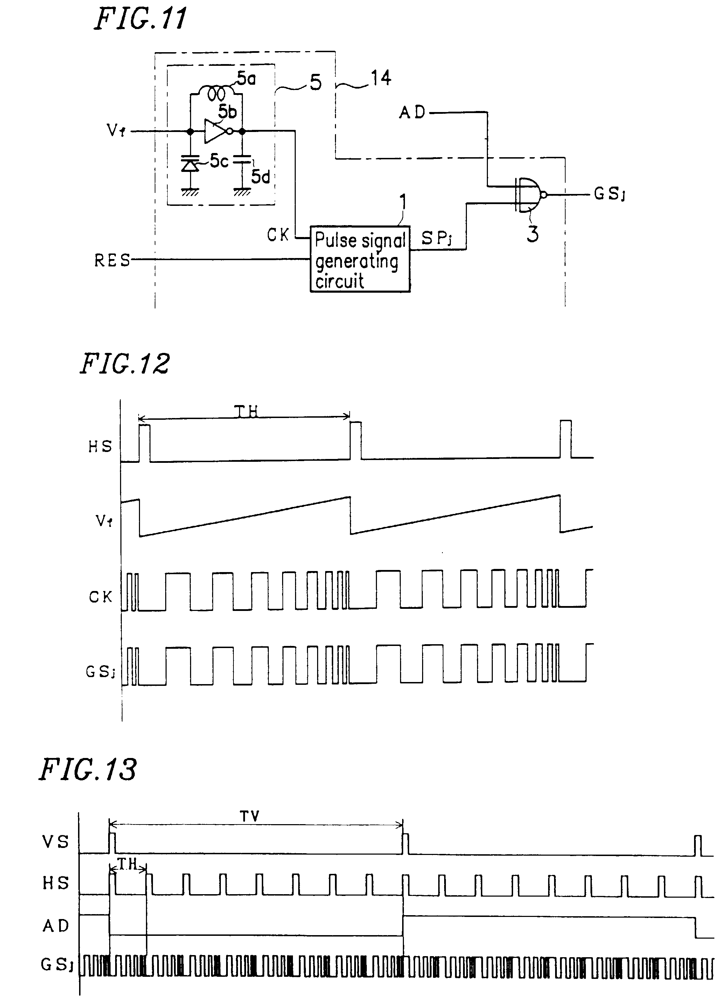

An active matrix type liquid crystal display apparatus according to Example 3 will now be described. This liquid crystal display apparatus is also identical to those of Examples 1 and 2 except the configuration of a gray scale signal generating circuit **14**, and hence the description of the common elements is omitted. The configuration of the gray scale signal generating circuit **14** is shown in a block diagram of Figure **11**.

The gray scale signal generating circuit **14** includes a clock period variable circuit **5** and plural sets of a pulse signal generating circuit **1** and an EXNOR circuit **3** as is shown in Figure **11**, and the number of the sets is equal to the number of levels of the gray scale display. Also Figure **11** shows merely one set of the pulse signal generating circuit **1** and the EXNOR circuit **3**. The clock period variable circuit **5** is a variable frequency oscillator including an inductance **5a,** an inverter circuit **5b**, a varicap (variable capacitor diode) **5c** and a capacitor **5d.** A frequency control voltage **Vf** transferred from a timing controller **13** is applied to the varicap **5c** of the clock period variable circuit **5**. Therefore, when the voltage level of the frequency control voltage **Vf** is varied, the capacitance of the varicap **5c** is accordingly varied, resulting in varying the oscillation frequency of the clock period variable circuit **5**. The oscillating signal from the clock period variable circuit **5** is supplied to the pulse generating circuit **1** as a clock signal **CK.**

Each pulse signal generating circuit **1** generates, in accordance with the clock signal **CK** supplied by the clock period variable circuit **5** and a reset signal **RES** generated by the timing controller **13,** a pulse signal **SPj** having the same period as and a different duty ratio from those of signals generated by the other pulse signal generating circuits. The rest of the circuit configuration is the same as that of the conventional liquid crystal display apparatus shown in Figure **26.**

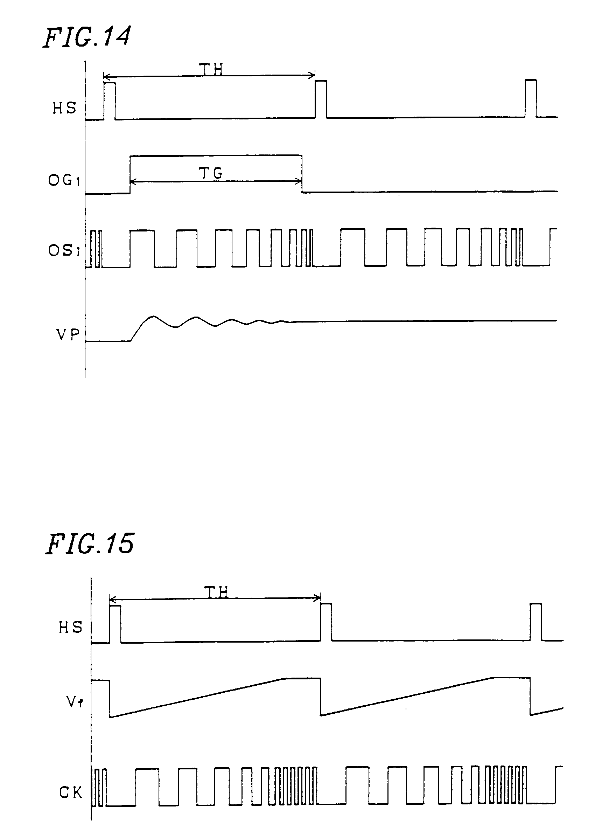

The operation of this liquid crystal display apparatus will be described referring to timing diagrams shown in Figures **12** through **14**. Figure **12** is a timing diagram for showing the operation of the clock period variable circuit **5**, Figure **13** is a timing diagram for showing the operation of the EXNOR circuit **3** and Figure **14** is a timing diagram for showing the voltage waveform at a pixel electrode.

As is shown in Figure **12**, the frequency control voltage **Vf** is a sawtooth wave whose voltage level is linearly varied between a high level and a low level in each horizontal scanning term **TH.** When the frequency control voltage **Vf** is at a low level, the clock period variable circuit **5** generates an oscillating signal with a long period, and as the frequency control voltage **Vf** becomes higher, it generates an oscillating signal with a shorter period. Therefore, the pulse signal **SPj** generated by the pulse signal generating circuit 1 has a long period at the beginning of each horizontal scanning term **TH.** The period of the pulse signal **SPj** is steplessly shortened thereafter, and at the end of the horizontal scanning term **TH,** the period becomes short enough to attain a frequency in mHz.

The pulse signal **SPj** is transferred to the EXNOR circuit **3** so as to calculate an exclusive **OR** with the **AC** driving signal **AD,** and then is output through the gray scale signal generating circuit **14** as the gray scale pulse signal **GSj** in which the duty ratio is inverted in each vertical scanning term **TV** as is shown in Figure **13.** Similarly to the column electrode driving circuit **16** of Figure **27,** the column electrode driving circuit **16** of this example also alternately repeats the two kinds of voltages **VSH** and **VSL** at the same period and at the same duty ratio as those of the gray scale pulse signal **GSj**, thereby outputting the column electrode driving signal **OSi** to the column electrode **Si.**

Over the row electrode scanning term **TG** when, for example, a row electrode scanning signal **OG1** is at a high level, the column electrode driving signal **Osi** is applied to a pixel electrode **P1j** as the oscillating voltage via a TFT **Q1j** as is shown in Figure **9**. Then, the voltage waveform **VP** of the pixel electrode **P1j** in consideration of the actual low-pass filter characteristic is not sufficiently averaged at first since the period of the oscillating voltage is long. As time passes, however, to the end of the row electrode scanning term **TG**, the period of the oscillating voltage is steplessly shortened, and hence, the voltage waveform **VP** is sufficiently averaged and becomes substantially constant. At this point, in the case where the period of the oscillating voltage at the end of the row electrode scanning term **TG** is set to be sufficiently short so as to attain a frequency in mHz, even when the previous periods are rather long for sufficient averaging, the charging voltage can be averaged without fail in the end as far as the pixel electrode is charged to some extent. Further, as compared with the case where the oscillating voltage has a constant period that is short enough for the sufficient averaging over the entire row electrode scanning term **TG,** the number of the times of alternately repeating the two kinds of voltages **VSH** and **VSL** in the row electrode driving signal **OSi** is sufficiently small in this example.

Accordingly, similarly to Example 2, also in Example 3, the number of the times of charging/discharging the column electrode capacitance **CS** of the column electrode **Si** is decreased in the former portion of each horizontal scanning term **TH** because the period of the oscillating voltage is long. As a result, the power consumed can be decreased. Further, in the latter portion of each horizontal scanning term **TH**, the charging voltage can be averaged without fail because the period of the oscillating voltage is sufficiently short. Therefore, there is no possibility of the degradation of the display quality. In addition, since the period of the oscillating voltage can be steplessly and smoothly shortened in this example, the charging voltage can be averaged more rapidly than in Example 2.

Figure **15** is a timing diagram showing another operation of the clock period variable circuit **5**. As is shown in Figure **15**, the frequency control voltage **Vf** is linearly increased to a high level in the former portion of each horizontal scanning term **TH,** and can be retained at the same constant level in the latter portion of the horizontal scanning term **TH**. In this case, the period of the pulse signal **SPj** generated by the pulse signal generating circuit **1** is steplessly shortened at the beginning of the horizontal scanning term **TH,** and becomes constant in the end. Thus, the application of an oscillating voltage having too short a period can be avoided at the very end of the horizontal scanning term **TH.**

### (Example 4)

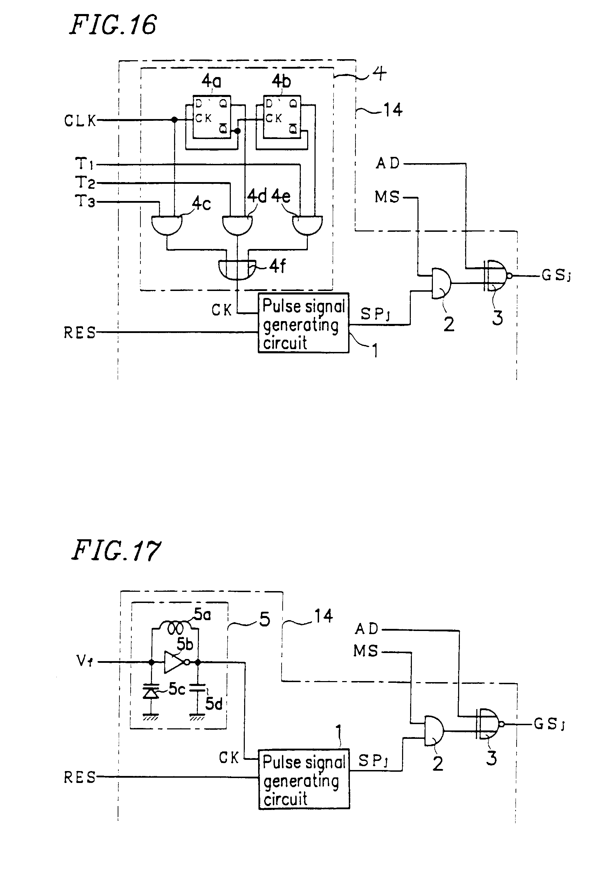

Example **4** is a combination of Examples 1 and 2, and the configuration of a gray scale signal generating circuit **14** used in a liquid crystal display apparatus of Example **4** is shown in the block diagram of Figure **16**. The gray scale signal generating circuit **14** includes both an AND circuit **2** and a clock period switching circuit **4**. As a result, in this liquid crystal display apparatus, no oscillating voltage is applied to a column electrode **S** in a non-drive term that makes no contribution to the charge of a pixel electrode **P**. In addition, in the former portion of each horizontal scanning term **TH**, the oscillating voltage has a longer period, so that the number of the times of charging/discharging a column electrode capacitance **CS** of a column electrode **Si** be decreased. Accordingly, the waste of power for the charge/discharge of the column electrode capacitance **CS** can be avoided.

### (Example 5)

Example 5 is a combination of Examples 1 and 3, and the configuration of a gray scale signal generating circuit **14** used in a liquid crystal display apparatus of Example 5 is shown in a block diagram of Figure **17**. This gray scale signal generating circuit **14** includes both an AND circuit **2** and a clock period variable circuit **5**. Therefore, also in this liquid crystal display apparatus, no oscillating voltage is applied to a column electrode **S** in a non-drive term that makes no contribution to the charge of a pixel electrode **P**. In addition, the oscillating voltage has a longer period at the beginning of each horizontal scanning term **TH,** so that the number of the times of charging/discharging a column electrode capacitance **CS** of a column electrode **Si** is decreased. As a result, the waste of power for the charge/discharge of the column electrode capacitance **CS** can be avoided.

Although a liquid crystal display apparatus is described in the aforementioned examples, the present invention is applicable to other display apparatuses using the other electro-optical materials.

As is apparent from the above description, according to the present invention, power to be consumed in a display apparatus can be decreased by voltage switching inhibition means for avoiding wasteful charge/discharge of a column electrode capacitance in a non-drive term which makes no contribution to the charge of a pixel electrode. Furthermore, the power consumed in a display apparatus can be decreased by elongating the switching period for voltages at the beginning of a row electrode scanning term so as to decrease the number of times of wastefully charging/discharging the column electrode capacitance.

## Claims

1. An active matrix type display apparatus comprising:
a display medium made of an electro-optical material;
a pair of substrates (11, 12) opposing each other with the display medium interposed therebetween;
a plurality of pixel electrodes (Pij) formed in a matrix on one of the substrates (11);
a plurality of row electrodes (Gi) each of which is disposed so as to correspond to a respective row of the pixel electrodes (Pij) in the matrix;
a plurality of column electrodes (Sj) each of which is disposed so as to correspond to a respective column of the pixel electrodes (Pij) in the matrix;
switching devices (Qij), each of which is disposed so as to correspond to a respective pixel electrode, selectively connects the corresponding pixel electrode to the column electrode corresponding to the pixel electrode, and is connected through its control terminal to the row electrode corresponding to the respective pixel electrode;
a row electrode driving circuit (17) for applying a voltage to each of the row electrodes (Gi) so that the corresponding switching devices (Qij) become conductive only in a row electrode scanning term during a horizontal scanning term assigned to a respective row electrode (Gi);
a column electrode driving circuit (16) for alternately applying two different voltages (VSH, VSL) to each of the column electrodes (Sj) repeatedly at a duty ratio in accordance with display data corresponding to each of the column electrodes (Sj); and
voltage switching inhibition means (2, 3; 3, 4; 3; 2, 3, 4) for inhibiting switching of the voltages to be applied to each of the column electrodes by the column electrode driving circuit (16) at least in a part of a term that is not assigned as the row electrode scanning term of any of the row electrodes.

2. An active matrix type display apparatus according to Claim 1,
wherein the column electrode driving circuit (16) comprises:
pulse signal generating circuits (1) for generating plural pulse signals having different duty ratios;
a pulse signal selecting circuit (16c, 16d) for selecting one of the pulse signals in accordance with the display data corresponding to each of the column electrodes; and
a voltage switching circuit (16f) for switching a voltage to be applied to each of the column electrodes between the voltages (VSH, VSL) in accordance with the selected pulse signal, and
the voltage switching inhibition means masks the plural pulse signals generated by the pulse signal generating circuits over substantially the entire term that is not assigned as the row electrode scanning term of any of the row electrodes, so that the pulse signals have a constant voltage level, and transfers the masked signals to the pulse signal selecting circuit (16c, 16d).

3. An active matrix type display apparatus according to Claim 1,
wherein the column electrode driving circuit (16) varies a switching period for the voltages to be applied to each of the column electrodes in each horizontal scanning term, so that the switching period becomes shorter at the end of each row electrode scanning term than at least at the beginning of the row electrode scanning term, and
the display apparatus further comprises voltage switching period shortening means (5) for not increasing the switching period in the row electrode scanning term.

4. An active matrix type display apparatus according to Claim 3,
wherein the column electrode driving circuit (16) comprises:
pulse signal generating circuits (1) for generating plural pulse signals having different duty ratios;
a pulse signal selecting circuit (16c, 16d) for selecting one of the pulse signals in accordance with the display data corresponding to each of the column electrodes; and
a voltage switching circuit (16f) for switching a voltage to be applied to each of the column electrodes between the two voltages (VSH, VSL) in accordance with the selected pulse signals, and
the voltage switching period shortening means (5) varies a switching period for the voltages to be applied to the column electrodes in each horizontal scanning term, so that the switching period become shorter at the end of each row electrode scanning term than at least at the beginning of the row electrode scanning term, and does not increase the switching period in the row electrode scanning term.

5. An active matrix type display apparatus according to Claim 1,
wherein the electro-optical material is liquid crystal.

6. An active matrix type display apparatus comprising:
a display medium made of an electro-optical material;
a pair of substrates (11, 12) opposing each other with the display medium interposed therebetween;
a plurality of pixel electrodes (Pij) formed in a matrix on one of the substrates (11);
a plurality of row electrodes (Gi) each of which is disposed so as to correspond to a respective row of the pixel electrodes (Pij) in the matrix;
a plurality of column electrodes (Sj) each of which is disposed so as to correspond to a respective column of the pixel electrodes (Pij) in the matrix;
switching devices (Qij) each of which is disposed so as to correspond to a respective pixel electrode, which selectively connects the corresponding pixel electrode to the column electrode corresponding to the pixel electrode, and is connected through its control terminal to the row electrode corresponding to the pixel electrode;
a row electrode driving circuit (17) for applying a voltage to each of the row electrodes (Gi) so that the corresponding switching device become conductive only in a row electrode scanning term during a horizontal scanning term assigned to the corresponding row electrode (Gi);
a column electrode driving circuit (16) for alternately applying two voltages (VSH, VSL) to each of the column electrodes (Sj) repeatedly at a duty ratio in accordance with display data corresponding to each f the column electrodes (Sj); and
voltage switching period shortening means (5) for varying a switching period for the voltages to be applied to each of the column electrodes in each horizontal scanning term, so that the switching period becomes shorter at the end of each row electrode scanning term than at least at the beginning of the row electrode scanning term, and for not increasing the switching period in the row electrode scanning term.

7. An active matrix type display apparatus according to Claim 6,
wherein the column electrode driving circuit (16) comprises:
pulse signal generating circuits (1) for generating plural pulse signals having different duty ratios;
a pulse signal selecting circuit (16c, 16d) for selecting one of the pulse signals in accordance with the display data corresponding to each of the column electrodes; and
a voltage switching circuit (16f) for switching a voltage to be applied to each of the column electrodes between the two voltages (VSH, VSL) in accordance with the selected pulse signal.

8. An active matrix type display apparatus according to Claim 6,
wherein the voltage switching period shortening means (5) shortens the switching period for the two voltages (VSH, VSL) in a stepwise manner in each row electrode scanning term.

9. An active matrix type display apparatus according to Claim 6,
wherein the voltage switching period shortening means (5) steplessly shortens the switching period for the voltages (VSH, VSL) in each row electrode scanning term.

10. An active matrix type display apparatus according to Claim 6,
wherein the voltage switching period shortening means (5) steplessly shortens the switching period for the voltages (VSH, VSL) up to an intermediate point in each row electrode scanning term and makes the switching period constant thereafter.

11. An active matrix display apparatus according to Claim 6,
wherein the electro-optical material is liquid crystal.

## Patentansprüche

1. Anzeigevorrichtung vom Aktivmatrixtyp mit:
- einem Anzeigemedium aus einem elektrooptischen Material;
- einem Paar von Substraten (11, 12), die einander gegenüberstehen, wobei das Anzeigemedium dazwischen eingefügt ist;
- einer Vielzahl von Pixelelektroden (Pij), die in einer Matrix auf einem der Substrate (11) ausgebildet sind;
- einer Vielzahl von Zeilenelektroden (Gi), von denen jede so angeordnet ist, dass sie einer jeweiligen Zeile von Pixelelektroden (Pij) in der Matrix entspricht;
- einer Vielzahl von Spaltenelektroden (Sj), von denen jede so angeordnet ist, dass sie einer jeweiligen Spalte der Pixelelektroden (Pij) in der Matrix entspricht;
- Schaltbauteilen (Qij), von denen jedes so angeordnet ist, dass es einer Pixelelektrode entspricht, es die entsprechende Pixelelektrode selektiv mit der der Pixelelektrode entsprechenden Spaltenelektrode verbindet und über seinen Steueranschluss mit der der jeweiligen Pixelelektrode entsprechenden Zeilenelektrode verbunden ist;
- einer Zeilenelektroden-Treiberschaltung (17) zum Anlegen einer Spannung an jede der Zeilenelektroden (Gi) in solcher Weise, dass die entsprechenden Schaltbauteile (Qij) nur innerhalb einer Zeilenelektroden-Abtastperiode während einer Horizontalabtastperiode, wie einer jeweiligen Zeilenelektrode (Gi) zugeordnet, leitend werden;
- einer Spaltenelektroden-Treiberschaltung (16) zum abwechselnden Anlegen zweier verschiedener Spannungen (VSH, VSL) an jede der Spaltenelektroden (Sj) auf wiederholte Weise mit einem Tastverhältnis entsprechend Anzeigedaten, wie sie jeder der Spaltenelektroden (Sj) entsprechen; und
- einer Spannungsumschalt-Verhinderungseinrichtung (2, 3; 3, 4; 3; 2, 3, 4) zum Verhindern des Umschaltens der an jede der durch die Spaltenelektroden-Treiberschaltung (16) anzulegenden Spannungen zumindest in einem Teil einer Periode, der nicht als Zeilenelektroden-Abtastperiode einer der Zeilenelektroden zugeordnet ist.

2. Anzeigevorrichtung vom Aktivmatrixtyp nach Anspruch 1, bei der die Spaltenelektroden-Treiberschaltung (16) folgendes aufweist:
- Impulssignal-Erzeugungsschaltungen (1) zum Erzeugen mehrerer Impulssignale mit verschiedenen Tastverhältnissen;
- eine Impulssignal-Auswählschaltung (16c, 16d) zum Auswählen eines der Impulssignale entsprechend den jeder der Spaltenelektroden entsprechenden Anzeigedaten; und
- eine Spannungsumschaltstufe (16f) zum Umschalten der an jede der Spaltenelektroden anzulegenden Spannung zwischen den Spannungen (VSH, VSL), die dem ausgewählten Impulssignal entsprechen; und
- wobei die Spannungsumschalt-Verhinderungseinrichtung die mehreren von den Impulssignal-Erzeugungsschaltungen erzeugten Impulssignale über im wesentlichen die gesamte Periode maskiert, die nicht als Zeilenelektrode-Abtastperiode einer der Zeilenelektroden zugeordnet ist, so dass die Impulssignale einen konstanten Spannungspegel aufweisen, und sie die maskierten Signale an die Impulssignal-Auswählschaltung (16c, 16d) überträgt.

3. Anzeigevorrichtung vom Aktivmatrixtyp nach Anspruch 1, bei der
- die Spaltenelektroden-Treiberschaltung (16) eine Umschaltperiode für die an jede der Spaltenelektroden in jeder Horizontalabtastperiode anzulegenden Spannungen in solcher Weise, dass die Umschaltperiode am Ende jeder Zeilenelektroden-Abtastperiode kürzer wird als zumindest zu Beginn der Zeilenelektroden-Abtastperiode; und
- diese Anzeigevorrichtung ferner eine Spannungsumschaltperiode-Verkürzungseinrichtung (5) aufweist, und die Umschaltperiode in der Zeilenelektroden-Abtastperiode nicht zu erhöhen.

4. Anzeigevorrichtung vom Aktivmatrixtyp nach Anspruch 3, bei der die Spaltenelektroden-Treiberschaltung (16) folgendes aufweist:
- Impulssignal-Erzeugungsschaltungen (1) zum Erzeugen mehrerer Impulssignale mit verschiedenen Tastverhältnissen;
- eine Impulssignal-Auswählschaltung (16c, 16d) zum Auswählen eines der Impulssignale entsprechend den jeder der Spaltenelektroden entsprechenden Anzeigedaten; und
- eine Spannungsumschaltstufe (16f) zum Umschalten der an jede der Spaltenelektroden anzulegenden Spannung zwischen den Spannungen (VSH, VSL), die dem ausgewählten Impulssignal entsprechen; und
- wobei die Spannungsumschaltperiode-Verkürzungseinrichtung (5) die Umschaltperiode für die an die Spaltenelektroden in jeder Horizontalabtastperiode anzulegenden Spannungen so variiert, dass die Umschaltperiode am Ende jeder Zeilenelektroden-Abtastperiode kürzer wird als zumindest zu Beginn der Zeilenelektroden-Abtastperiode, und sich die Umschaltperiode in der Zeilenelektroden-Abtastperiode nicht erhöht.

5. Anzeigevorrichtung vom Aktivmatrixtyp nach Anspruch 1, bei der das elektrooptische Material ein Flüssigkristall ist.

6. Anzeigevorrichtung vom Aktivmatrixtyp mit:
- einem Anzeigemedium aus einem elektrooptischen Material;
- einem Paar von Substraten (11, 12), die einander gegenüberstehen, wobei das Anzeigemedium dazwischen eingefügt ist;
- einer Vielzahl von Pixelelektroden (Pij), die in einer Matrix auf einem der Substrate (11) ausgebildet sind;
- einer Vielzahl von Zeilenelektroden (Gi), von denen jede so angeordnet ist, dass sie einer jeweiligen Zeile von Pixelelektroden (Pij) in der Matrix entspricht;
- einer Vielzahl von Spaltenelektroden (Sj), von denen jede so angeordnet ist, dass sie einer jeweils in Spalte der Pixelelektroden (Pij) in der Matrix entspricht;
- Schaltbauteilen (Qij), von denen jedes so angeordnet ist, dass es einer Pixelelektrode entspricht, es die entsprechende Pixelelektrode selektiv mit der der Pixelelektrode entsprechenden Spaltenelektrode verbindet und über seinen Steueranschluss mit der der jeweiligen Pixelelektrode entsprechenden Zeilenelektrode verbunden ist;
- einer Zeilenelektroden-Treiberschaltung (17) zum Anlegen einer Spannung an jede der Zeilenelektroden (Gi) in solcher Weise, dass die entsprechenden Schaltbauteile (Qij) nur innerhalb einer Zeilenelektroden-Abtastperiode während einer Horizontalabtastperiode, wie einer jeweiligen Zeilenelektrode (Gi) zugeordnet, leitend werden;
- einer Spaltenelektroden-Treiberschaltung (16) zum abwechselnden Anlegen zweier verschiedener Spannungen (VSH, VSL) an jede der Spaltenelektroden (Sj) auf wiederholte Weise mit einem Tastverhältnis entsprechend Anzeigedaten, wie sie jeder der Spaltenelektroden (Sj) entsprechen; und
- einer Spannungsumschaltperiode-Verkürzungseinrichtung (5) zum Variieren einer Umschaltperiode für die an jede der Spaltenelektroden in jeder Horizontalabtastperiode anzulegenden Spannungen in solcher Weise, dass die Umschaltperiode am Ende jeder Zeilenelektroden-Abtastperiode kürzer wird als zumindest zu Beginn der Zeilenelektroden-Abtastperiode, und um die Umschaltperiode in der Zeilenelektroden-Abtastperiode nicht zu erhöhen.

7. Anzeigevorrichtung vom Aktivmatrixtyp nach Anspruch 6, bei der die Spaltenelektroden-Treiberschaltung (16) folgendes aufweist:
- Impulssignal-Erzeugungsschaltungen (1) zum Erzeugen mehrerer Impulssignale mit verschiedenen Tastverhältnissen;
- eine Impulssignal-Auswählschaltung (16c, 16d) zum Auswählen eines der Impulssignale entsprechend den jeder der Spaltenelektroden entsprechenden Anzeigedaten; und
- eine Spannungsumschaltstufe (16f) zum Umschalten der an jede der Spaltenelektroden anzulegenden Spannung zwischen den Spannungen (VSH, VSL), die dem ausgewählten Impulssignal entsprechen.

8. Anzeigevorrichtung vom Aktivmatrixtyp nach Anspruch 6, dadurch gekennzeichnet, dass die Spannungsumschaltperiode-Verkürzungseinrichtung (5) die Umschaltperiode für die zwei Spannungen (VSH, VSL) in jeder Zeilenelektroden-Abtastperiode schrittweise ändert.

9. Anzeigevorrichtung vom Aktivmatrixtyp nach Anspruch 6, dadurch gekennzeichnet, dass die Spannungsumschaltperiode-Verkürzungseinrichtung (5) die Umschaltperiode für die zwei Spannungen (VSH, VSL) in jeder Zeilenelektroden-Abtastperiode stufenlos ändert.

10. Anzeigevorrichtung vom Aktivmatrixtyp nach Anspruch 6, bei der die Spannungsumschaltperiode-Verkürzungseinrichtung (5) die Umschaltperiode für die Spannungen (VSH, VSL) bis zu einem Zwischenpunkt in jeder Zeilenelektroden-Abtastperiode stufenlos verkürzt und danach die Umschaltperiode konstant macht.

11. Aktivmatrix-Anzeigevorrichtung nach Anspruch 6, bei der das elektrooptische Material ein Flüssigkristall ist.

## Revendications

1. Dispositif d'affichage de type à matrice active comprenant :
un support d'affichage constitué d'un matériau optoélectronique ;
deux substrats (11, 12) opposés l'un à l'autre entre lesquels est interposé le support d'affichage ;
une multiplicité d'électrodes de pixel (Pij) constituant une matrice sur l'un des substrats (11) ;
une multiplicité d'électrodes de ligne (Gi) dont la disposition est telle que chacune correspond à une ligne respective des électrodes de pixel (Pij) de la matrice ;
une multiplicité d'électrodes de colonne (Sj) dont la disposition est telle que chacune correspond à une colonne respective des électrodes de pixel (Pij) de la matrice ;
des dispositifs de commutation (Qij), dont chacun est disposé de telle manière qu'il corresponde à une électrode de pixel respective, qu'il relie de manière sélective l'électrode de pixel correspondant à l'électrode de colonne correspondant à l'électrode de pixel et qu'il soit relié au moyen de sa borne de commande à l'électrode de ligne correspondant à l'électrode de pixel respective ;
un circuit de commande d'électrode de ligne (17) destiné à appliquer une tension à chacune des électrodes de ligne (Gi) de telle sorte que les dispositifs de commutation correspondants (Qij) ne deviennent conducteurs que pendant la période de balayage d'une électrode de ligne au cours de la période de balayage horizontal affectée à une électrode de ligne respective (Gi) ;
un circuit de commande d'électrode de colonne (16) destiné à appliquer alternativement deux tensions différentes (VSH, VSL) à chacune des électrodes de colonne (Sj) de manière répétée selon un facteur de marche conforme aux données d'affichage correspondant à chacune des électrodes de colonne (Sj) ; et
un moyen d'inhibition de commutation de tension (2, 3 ; 3, 4 ; 3 ; 2, 3, 4) destiné à inhiber la commutation des tensions à appliquer à chacune des électrodes de colonne au moyen du circuit de commande d'électrode de colonne (16) au moins dans une partie d'une période qui n'est pas affectée à la période de balayage d'électrode de ligne d'une électrode de ligne.

2. Dispositif d'affichage de type à matrice active selon la revendication 1, dans lequel le circuit de commande d'électrode de colonne (16) comprend :
des circuits de génération de signal d'impulsion (1) destinés à générer une multiplicité de signaux d'impulsion ayant différents facteurs de marche ;
un circuit de sélection de signal d'impulsion (16c, 16d) destiné à sélectionner un des signaux d'impulsion conformément aux données d'affichage correspondant à chacune des électrodes de colonne ; et
un circuit de commutation de tension (16f) destiné à commuter une tension à appliquer à chacune des électrodes de colonne entre les tensions (VSH, VSL) conformément au signal d'impulsion sélectionné, et
le moyen d'inhibition de commutation de tension masque la multiplicité de signaux d'impulsion générée par les circuits de génération de signal d'impulsion pour la quasi totalité de la période qui n'est pas affectée à la période de balayage d'électrode de ligne d'une des électrodes de ligne, de sorte que les signaux d'impulsion aient un niveau de tension constant, et transfère les signaux masqués au circuit de sélection de signal d'impulsion (16c, 16d).

3. Dispositif d'affichage de type à matrice active selon la revendication 1,
dans lequel le circuit de commande d'électrode de colonne (16) fait varier une période de commutation des tensions à appliquer à chacune des électrodes de colonne pour chaque durée de balayage horizontal, de sorte que la période de commutation devient plus courte à la fin de chaque période de balayage d'électrode de ligne qu'au moins au début de la période de balayage d'électrode de ligne, et
le dispositif d'affichage comprend en outre un moyen de limitation de période de commutation de tension (5) destiné à ne pas accroître la période de commutation de la période de balayage d'électrode de ligne.

4. Dispositif d'affichage de type à matrice active selon la revendication 3, dans lequel le circuit de commande d'électrode de colonne (16) comprend :
des circuits de génération de signal d'impulsion (1) destinés à générer une multiplicité de signaux d'impulsion ayant différents facteurs de marche ;
un circuit de sélection de signal d'impulsion (16c, 16d) destiné à sélectionner un des signaux d'impulsion conformément aux données d'affichage correspondant à chacune des électrodes de colonne ; et
un circuit de commutation de tension (16f) destiné à commuter une tension à appliquer à chacune des électrodes de colonne entre les deux tensions (VSH, VSL) conformément aux signaux d'impulsion sélectionnés, et
le moyen de limitation de période de commutation de tension (5) fait varier une période de commutation des tensions à appliquer aux électrodes de colonne pour chaque période de balayage horizontal, de sorte que la période de commutation devienne plus courte à la fin de chacune des périodes de balayage d'électrode de ligne qu'au moins au début de la période de balayage d'électrode de ligne et n'augmente pas la période de commutation de la période de balayage d'électrode de ligne.

5. Dispositif d'affichage de type à matrice active selon la revendication 1, dans lequel le matériau optoélectronique est constitué de cristaux liquides.

6. Dispositif d'affichage de type à matrice active comprenant :
un support d'affichage constitué d'un matériau optoélectronique ;
deux substrats (11, 12) opposés l'un à l'autre entre lesquels est interposé le support d'affichage ;
une multiplicité d'électrodes de pixel (Pij) constituant une matrice sur l'un des substrats (11) ;
une multiplicité d'électrodes de ligne (Gi) dont la disposition est telle que chacune correspond à une ligne respective des électrodes de pixel (Pij) de la matrice ;
une multiplicité d'électrodes de colonne (Sj) dont la disposition est telle que chacune correspond à une colonne respective des électrodes de pixel (Pij) de la matrice ;
des dispositifs de commutation (Qij), dont chacun est disposé de telle manière qu'il correspond à une électrode de pixel respective, qu'il relie de manière sélective l'électrode de pixel correspondant à l'électrode de colonne correspondant à l'électrode de pixel et qu'il soit relié au moyen de sa borne de commande à l'électrode de ligne correspondant à l'électrode de pixel respective ;
un circuit de commande d'électrode de ligne (17) destiné à appliquer une tension à chacune des électrodes de ligne (Gi) de telle sorte que les dispositifs de commutation correspondants ne deviennent conducteurs que pendant la période de balayage d'une électrode de ligne au cours d'une période de balayage horizontal affectée à une électrode de ligne respective (Gi) ;
un circuit de commande d'électrode de colonne (16) destiné à appliquer alternativement deux tensions différentes (VSH, VSL) à chacune des électrodes de colonne (Sj) de manière répétée selon un facteur de marche conforme aux données d'affichage correspondant à chacune des électrodes de colonne (Sj) ; et
un moyen de limitation de période de commutation de tension (5) destiné à faire varier une période de commutation des tensions à appliquer à chacune des électrodes de colonne pour chaque période de balayage horizontal, de sorte que la période de commutation devienne plus courte à la fin de chacune des périodes de balayage d'électrode de ligne qu'au moins au début de la période de balayage d'électrode de ligne et n'augmente pas la période de commutation de la période de balayage d'électrode de ligne.

7. Dispositif d'affichage de type à matrice active selon la revendication 6,
dans lequel le circuit de commande d'électrode de colonne (16) comprend :
des circuits de génération de signal d'impulsion (1) destinés à générer une multiplicité de signaux d'impulsion ayant différents facteurs de marche ;
un circuit de sélection de signal d'impulsion (16c, 16d) destiné à sélectionner un des signaux d'impulsion conformément aux données d'affichage correspondant à chacune des électrodes de colonne ; et
un circuit de commutation de tension (16f) destiné à commuter une tension à appliquer à chacune des électrodes de colonne entre les deux tensions (VSH, VSL) conformément aux signaux d'impulsion sélectionnés.

8. Dispositif d'affichage de type à matrice active selon la revendication 6,
dans lequel le moyen de limitation de période de commutation de tension (5) réduit la période de commutation des deux tensions (VSH, VSL) par paliers pour chaque période de balayage d'électrode de ligne.

9. Dispositif d'affichage de type à matrice active selon la revendication 6,
dans lequel le moyen de limitation de période de commutation de tension (5) réduit progressivement la période de commutation des tensions (VSH, VSL) pour chaque période de balayage d'électrode de ligne.

10. Dispositif d'affichage de type à matrice active selon la revendication 6,
dans lequel le moyen de limitation de période de commutation de tension (5) limite progressivement la période de commutation pour les tensions (VSH, VSL) jusqu'à un point intermédiaire de chacune des périodes de balayage d'électrode de ligne et fait en sorte que la période de commutation soit ensuite constante.

11. Dispositif d'affichage à matrice active selon la revendication 6,
dans lequel le matériau optoélectronique est constitué de cristaux liquides.
